# FASCICULE DE BREVET EUROPEEN

(11) **EP 2 475 513 B1**
(45) Date de publication et mention de la délivrance du brevet: **23.07.2014**
(21) Numéro de dépôt: 10748109.5
(22) Date de dépôt: 06.09.2010
(51) Int. Cl.: B29C 49/48, B29C 49/06

(54) **Dispositif de moulage**
Formvorrichtung
Moulding apparatus

(30) Priorité: 07.09.2009 FR 0956082; 07.09.2009 FR 0956084
(43) Date de publication de la demande: 18.07.2012
(73) Titulaire: Sidel Participations, 76930 Octeville sur Mer (FR)
(72) Inventeur: PASQUIER, Hervé, F-76930 Octeville sur Mer (FR); CIRETTE, Damien, F-76930 Octeville sur Mer (FR); CHOMEL, Nicolas, F-76930 Octeville sur Mer (FR); DUCLOS, Yves-Alban, F-76930 Octeville sur Mer (FR)
(74) Mandataire: Gevers France
(86) Numéro de dépôt international: PCT/EP2010/063051
(87) Numéro de publication internationale: WO 2011/026980

(56) Documents cités:
- DE-C1- 3 613 543
- FR-A1- 2 659 265
- DATABASE WPI Week 200913 Thomson Scientific, London, GB; AN 2009-B43619 XP002604446 -& CN 201 165 049 Y (GUANGZHOU DAYILONG PACKING MACHINE CO LT) 17 décembre 2008 (2008-12-17)

## Description

La présente invention concerne un dispositif de moulage pour une machine de fabrication de récipients en matière thermoplastique, notamment des bouteilles.

La présente invention concerne plus particulièrement un dispositif de moulage pour une machine de fabrication de récipients en matière thermoplastique par formage au moyen d'au moins un fluide sous pression d'une préforme préalablement chauffée.

On connaît de l'état de la technique des dispositifs de moulage destinés à équiper des machines de fabrication de récipients, notamment mais non exclusivement des machines dites "rotatives" comportant un carrousel circonférentiellement pourvu d'un nombre déterminé de postes de soufflage identiques.

La fabrication de récipients en matière plastique, tels que des bouteilles, flacons, etc., y est effectuée à partir de préformes ou d'ébauches préalablement chauffées dans un four de conditionnement thermique.

En phase de fabrication, selon le nombre d'empreinte des moules, une ou plusieurs préformes sont ainsi amenée(s) à un poste de la machine pour être introduite(s) dans un dispositif de moulage auquel sont associés des moyens de formage par application d'au moins un fluide sous pression, gazeux et/ou liquide.

Le formage (ou mise en forme) de la préforme est par exemple obtenu par soufflage ou par étirage-soufflage au moyen d'un gaz sous pression, tel que de l'air, voir au moins en partie au moyen d'un liquide sous pression.

Dans une machine de fabrication "rotatives", chaque dispositif de moulage, dit en "portefeuille", comporte au moins un moule constitué de deux demi-moules supportés respectivement par deux porte-moules qui sont montés mobiles l'un par rapport à l'autre autour d'un axe de rotation, généralement d'orientation verticale.

Chaque demi-moule est généralement reçu dans un logement complémentaire du porte-moule associé auquel le demi-moule est fixé de manière amovible par l'intermédiaire de moyens de fixation afin de permettre un démontage en vue d'un changement du moule.

Un changement de moule est en particulier requis pour procéder à des fabrications de récipients de formes et/ou de dimensions différentes ou encore à leur remplacement en cas d'endommagement et/ou d'usure des demi-moules. Des dispositifs de moulage sont connues des documents FR2659265 et CN201165049.

Pour réduire tant les coûts de fabrication que le temps nécessaire à un tel démontage du moule, on a déjà proposé dans le document EP-B1-0.821.641 différents perfectionnements à de tels dispositifs de moulage en "portefeuille".

Tout d'abord, des moyens de régulation de la température des empreintes de chaque demi-moule sont réalisés en une pièce distincte du demi-moule de sorte que chaque demi-moule comprend (selon les désignations de ce document) d'une part un porte-coquille pourvu des moyens de régulation de température qui est destiné à être supporté par le porte-moule et, d'autre part, une coquille munie d'une demi-empreinte du récipient à obtenir qui est apte à être solidarisée de manière amovible au porte-coquille par l'intermédiaire de moyens de fixation d'un dispositif de fixation.

Ensuite, les moyens de fixation de la coquille sur le porte-coquille sont disposés sur les bords respectifs de la coquille et de la demi-coquille qui sont parallèles à l'axe principal de l'empreinte.

Ces moyens de fixation comportent en particulier des moyens de vissage d'une barre de serrage sur une face de joint du porte-coquille. La barre de serrage comporte des pattes de serrage débordant sur la face de joint du demi-moule pour assurer la fixation de la coquille solidairement au porte-coquille.

Avec de tels moyens de fixation, les étapes de montage et de démontage d'un changement de moule pour un dispositif de moulage équipant un poste d'une machine de fabrication de type rotative, encore appelée « souffleuse », sont mises en oeuvre par au moins un opérateur et la mise en place de la coquille est obtenue suivant un mouvement circulaire.

Plus précisément, la coquille est introduite dans le logement correspondant du porte-coquille, le bord du moule situé du côté des moyens d'articulation entre les porte-moules est tout d'abord amené en position puis poursuivant le mouvement circulaire l'on amène l'autre bord en position pour procéder à la fixation par l'intermédiaire des moyens de fixation qui sont alors commandés.

Ainsi, les opérations de montage et de démontage requièrent l'utilisation d'outils, tels que des tournevis, pour agir sur les moyens de fixation et cela alors que l'opérateur se tient face aux porte-moules en position ouverte.

On procède ainsi successivement au démontage d'une coquille puis à celui de l'autre coquille, de même que le montage des nouvelles coquilles sont effectués l'une après l'autre.

On comprendra aisément qu'une telle opération de montage et/ou démontage est délicate et que les dispositifs de moulage de type en "portefeuille" présentent des spécificités propres en particulier de difficultés d'accès pour l'opérateur devant utiliser ces outils et manoeuvrer avec précision chaque coquille (ou demi-moule).

De plus, malgré les perfectionnements apportés aux moyens de fixation, on cherche à réduire encore le temps total nécessaire au changement de moule comportant le démontage et le montage des demi-moules.

En effet, l'immobilisation de la machine durant ces opérations présente un coût important du fait de l'arrêt complet de la fabrication qui l'accompagne, les opérations de changement de moule étant plus ou moins fréquentes selon les utilisateurs.

C'est l'une des raisons pour lesquelles, on recherche à réduire encore et toujours les temps nécessaires pour procéder à ces étapes de montage/démontage des demi-moules lors d'un changement de moule.

Dans ce but, l'invention propose un dispositif selon la revendication 1.

Grâce à l'invention, il est en effet possible d'agir sur les moyens de fixation, depuis l'extérieur du dispositif de moulage, de manière à fixer ou libérer sélectivement les demi-moules par rapport au porte-moules et cela quelle que soit la position ouverte ou fermée occupée par les porte-moules.

Par comparaison avec les moyens de fixation selon l'état de la technique pour lesquels les porte-moules doivent nécessairement être en position ouverte pour autoriser l'accès au moyens de fixation, les moyens de fixation selon l'invention sont susceptibles d'être commandés indépendamment de la position ouverte ou fermée desdits porte-moules.

Avantageusement, les moyens de fixation selon l'invention permettent de procéder à la fixation ou à la libération de chaque demi-moule aisément, sans manipulation fastidieuse d'outils, la commande des moyens de fixation étant obtenue rapidement et simplement et cela que les porte-moules occupent la position ouverte ou la position fermée.

Grâce à l'invention, il est possible de réaliser les opérations de montage ou démontage de chacun des éléments formant le moule comme expliqué précédemment pour l'état de la technique, par exemple lorsque l'un des bords seulement de la coquille est pourvu des moyens selon l'invention et l'autre bord de moyens conventionnels, on réalise alors successivement l'opération pour chacune des coquilles et le fond de moule.

Avantageusement, il est également possible, lorsque les deux bords de chaque coquille sont équipés conformément à l'invention, de réaliser en une unique opération le montage ou démontage d'un sous-ensemble unitaire, comportant par exemple les deux demi-coquilles emprisonnant le fond de moule, lequel sous-ensemble est alors apte à être extrait en une unique opération dès l'ouverture des porte-moules et cela grâce aux moyens de fixation selon l'invention qui autorisent l'extraction ou l'introduction de chaque coquille hors ou dans le logement de chaque porte-coquille selon un mouvement de translation.

De manière non limitative, les moyens de fixation proposés dans la présente demande sont des moyens dits de type mécanique, plus particulièrement caractérisés par l'utilisation d'un organe d'actionnement des moyens de fixation mobiles entre les positions de fixation et de libération, lequel organe d'actionnement est apte à être commandé par des moyens associés d'un dispositif de commande, y compris lorsque les porte-moules sont en position fermée.

De préférence, le dispositif de commande pourvu de moyens d'actionnement des moyens de fixation n'est pas intégré au dispositif de moulage mais réalisé sous la forme d'un dispositif indépendant apte à être agencé, temporairement ou de manière permanente, en une position de fonctionnement dans une zone déterminée de la machine de fabrication de récipients.

Selon d'autres caractéristiques de l'invention :
- les moyens de fixation comportent au moins un organe d'actionnement des moyens de fixation apte à être commandé en déplacement depuis l'extérieur du dispositif de moulage pour provoquer la libération ou la fixation de chaque demi-moule au porte-moule par les moyens de fixation et cela quelle que soit la position ouverte ou fermée des porte-moules du dispositif de moulage ;
- les moyens de fixation sont au moins en partie intégrés à l'intérieur du dispositif de moulage et sont agencés entre un bord du demi-moule et un bord du porte-moule qui sont respectivement parallèles à l'axe de rotation de manière à fixer le demi-moule sur l'un et/ou l'autre de ses bords ;
- l'organe d'actionnement comporte une partie de commande qui s'étend en tout ou en partie en saillie à l'extérieur du dispositif de moulage ;
- l'organe d'actionnement des moyens de fixation est apte à être commandé sélectivement par un dispositif de commande pour le faire coulisser entre au moins lesdites positions de fixation et de libération de chaque demi-moule ;
- les moyens de fixation comportent respectivement au moins un élément de fixation qui est solidaire de chaque demi-moule et au moins un autre élément de fixation qui, complémentaire dudit élément, est apte à être déplacé par l'organe d'actionnement ;
- ledit au moins un élément de fixation solidaire de chaque demi-moule est un premier élément de fixation de type mâle, tel qu'un pion, et ledit au moins un autre élément de fixation lié à l'organe d'actionnement est un second élément de fixation de type femelle, tel qu'un crochet ;
- ledit au moins un élément de fixation solidaire de chaque demi-moule est un second élément de fixation de type femelle, tel qu'un cran ou une encoche, et ledit au moins un autre élément de fixation lié à l'organe d'actionnement est un premier élément de fixation de type mâle, tel qu'un ergot ;
- l'organe d'actionnement comporte au moins deux seconds éléments de fixation dont l'un est relié audit organe avec interposition d'un organe élastique pour former une liaison à jeu apte à garantir le bon positionnement de chaque second élément avec le premier élément associé ;
- le dispositif de commande est apte à solliciter l'organe d'actionnement pour provoquer sélectivement le déplacement dudit organe d'actionnement portant les seconds éléments de fixation entre au moins :
   - la position de fixation dans laquelle le second élément coopère avec le premier élément du moule afin de fixer le demi-moule et le porte-moule en plaquant le demi-moule contre le porte-moule, et
   - la position de libération dans laquelle le second élément est escamoté afin de ne pas interférer avec le premier élément du demi-moule, en particulier lorsque le demi-moule occupe ladite position montée ;
- les moyens de fixation comportent des moyens de rappel élastique qui sollicitent l'organe d'actionnement vers la position de fixation de sorte que ledit organe est rappelé automatiquement vers ladite position de fixation ;
- le dispositif de moulage comporte un système de verrouillage qui, associé aux moyens de fixation, est commandé sélectivement pour verrouiller en position de fixation ou en position de libération l'organe d'actionnement comportant le second élément des moyens de fixation ;
- le système de verrouillage comporte des moyens de commande aptes à provoquer le déplacement d'au moins un loquet de verrouillage qui est monté mobile entre :
   - une position déverrouillée dans laquelle le loquet de verrouillage est escamoté pour laisser l'organe d'actionnement libre de coulisser, notamment entre les positions de fixation et de libération, et
   - une position verrouillée dans laquelle le loquet de verrouillage coopère sélectivement avec un premier cran ou avec un deuxième cran de l'organe d'actionnement, lesdits premier et deuxième crans correspondant respectivement à la position de fixation et à la position de libération de l'organe d'actionnement ;
- le système de verrouillage comporte un organe de rappel élastique du loquet de verrouillage de la position déverrouillée vers la position verrouillée de sorte que le loquet de verrouillage est rappelé automatiquement vers la position verrouillée par ledit organe élastique ;
- le deuxième cran de l'organe d'actionnement et le loquet de verrouillage sont conformés pour présenter, selon la direction de coulissement, un jeu propre à autoriser un déplacement de l'organe au-delà de la position de libération afin de commander sélectivement par l'intermédiaire du dispositif de commande des moyens de décollement du demi-moule par rapport au porte-moule ;
- les moyens de décollement sont constitués par une partie du second élément formant rampe qui est apte à exercer sur le premier élément un effort de décollement lorsque le dispositif de commande sollicite l'organe d'actionnement pour le faire coulisser au-delà de la position de libération suivant une surcourse déterminée par ledit jeu du loquet de verrouillage dans le deuxième cran ;
- le dispositif de moulage comporte des moyens de blocage en rotation aptes à bloquer en rotation l'organe d'actionnement ;
- une partie des moyens de blocage en rotation de l'organe d'actionnement est liée en déplacement audit organe et est apte à coopérer avec une autre partie solidaire du porte-moule.

D'autres caractéristiques et avantages de la présente invention apparaîtront à la lecture de la description détaillée qui va suivre pour la compréhension de laquelle on se reportera aux dessins dans lesquels :
- la figure 1 est une vue en perspective qui représente le dispositif de moulage en place sur un poste d'une machine de fabrication de récipients et qui illustre des porte-moules en position fermée comportant des demi-moules ;
- la figure 2 est une vue en perspective qui représente les principales parties du dispositif de moulage selon la figure 1 qui comporte des moyens de fixation selon un premier mode de réalisation de l'invention et qui illustre les porte-moules en position ouverte, des demi-moules constitués chacun d'un porte-coquille monté dans un logement d'un porte-moule et d'une coquille, les deux coquilles que complète un fond de moule formant un sous-ensemble unitaire propre à être extrait ou introduit entre les porte-moules en vue de son démontage ou montage ;
- la figure 3 est une vue en perspective qui représente en éclaté les demi-moules selon le premier mode de réalisation qui, pourvus des moyens de fixation selon l'invention, sont constitués respectivement ici des deux coquilles auxquelles est associé un fond de moule et des deux porte-coquilles destinés à être montés aux porte-moules et interposés entre ces derniers et les coquilles;
- la figure 4 est une vue en perspective qui représente en détail deux organes d'actionnement dont l'un est en coupe selon un plan d'orientation verticale, chaque organe étant muni de seconds éléments de fixation formés par des crochets dans ce premier mode ;
- les figures 5 et 6 sont des vues de face qui représentent un dispositif de moulage en position fermée et qui illustrent grâce à une coupe verticale les moyens de fixation selon le premier mode de réalisation de l'invention, chaque organe d'actionnement étant monté dans le porte-coquille et respectivement montré en position de fixation et de libération, notamment au moyen des vues de détails des figures 5A et 6A représentant les premiers et les seconds moyens de fixation ;
- les figures 7 à 9 sont des vues en perspective qui représentent, vu du dessous du dispositif de moulage, un exemple de réalisation d'un système de verrouillage pouvant être associé à l'organe d'actionnement des moyens de fixation, les figures 7, 8 et 9 illustrant successivement ledit système en position verrouillée de l'organe occupant la position de libération, en position déverrouillée et en position verrouillée de l'organe occupant la position de fixation ;
- la figure 10 est une vue en perspective qui représente un exemple de réalisation d'un dispositif de commande comportant des moyens d'actionnement de l'organe et qui illustre ledit dispositif à l'état libre, c'est-à-dire avant son accrochage sur une platine qui, représentée au dessus, est solidaire du porte-coquille;
- la figure 11 est une vue en perspective qui représente le dispositif de commande en cours de montage sur la platine afin de le positionner et procéder à son accrochage sur la platine ;
- les figures 12 et 13 sont des vues en perspective qui représentent le dispositif de commande dans une position déterminée par rapport à la platine, position préalable à partir de laquelle l'accrochage du dispositif à la platine est obtenu en déplaçant l'organe de commande des moyens d'accrochage du dispositif tel qu'illustré par la comparaison des figures 12 et 13 ;
- la figure 14 est une vue en coupe qui représente une partie du dispositif de commande accroché, soit en position de fonctionnement comme représenté à la figure 13, et qui illustre un doigt d'accrochage à l'intérieur du trou complémentaire de la platine ;
- la figure 15 est une vue en perspective qui, par comparaison avec la figure 13 illustrant la position de fonctionnement du dispositif de commande dans laquelle les moyens d'actionnement occupent une position de repos, représente lesdits moyens d'actionnement en position active obtenue par déplacement du levier afin d'amener la came à coopérer avec la partie de commande de l'organe d'actionnement et en vue de provoquer ainsi la libération des moyens de fixation en ayant préalablement pris soin de déverrouiller le système de verrouillage ;
- la figure 16 est une vue en perspective qui représente, en éclaté, un demi-moule comportant une coquille et un porte-coquille destinés à être fixés ensemble par des moyens de fixation réalisés sur l'un de ses bords selon un deuxième mode de réalisation de l'invention,
- les figures 17 et 18 sont des vues en perspective qui représentent la coquille en position montée puis fixée sur le porte-coquille et qui illustrent les moyens de fixation selon le deuxième mode respectivement en position de fixation et en position de libération,
- les figures 19 et 20 sont des vues en perspective qui représentent un exemple de réalisation d'un dispositif de commande apte à actionner l'organe d'actionnement des moyens de fixation par coins selon le deuxième mode de réalisation de l'invention ;
- les figures 21 et 22 sont respectivement des vues en perspectives d'ensemble et de détails qui représentent un troisième mode de réalisation des moyens de fixation.

Dans la suite de la description, on adoptera à titre non limitatif les orientations longitudinale, verticale et transversale en référence au trièdre (L, V, T) représentés sur les figures, étant précisé que les directions longitudinale et transversale sont déterminées de manière fixe par rapport aux porte-moules de sorte que la position ouverte ou fermée occupée est sans incidence sur lesdites orientations.

Par convention, on utilisera à titre non limitatif les termes "avant" et "arrière" en référence à l'orientation longitudinale, ainsi que "supérieur" et "inférieur" en référence à l'orientation verticale et enfin "gauche" ou "droite" et "intérieur" ou "extérieur" en référence à l'orientation transversale qui est plus particulièrement orientée depuis l'extérieur du moule vers l'intérieur du moule.

Dans la suite de la présente description, on utilisera indifféremment et de manière non limitative les termes "coquille" ou "demi-moule" pour désigner la première pièce comportant la demi-empreinte ainsi que par correspondance "porte-coquille" ou "porte-moule" pour désigner la seconde pièce recevant la première, étant précisé que lors d'un changement de moule le porte-coquille restant solidaire du porte-moule est assimilable à un ensemble monobloc.

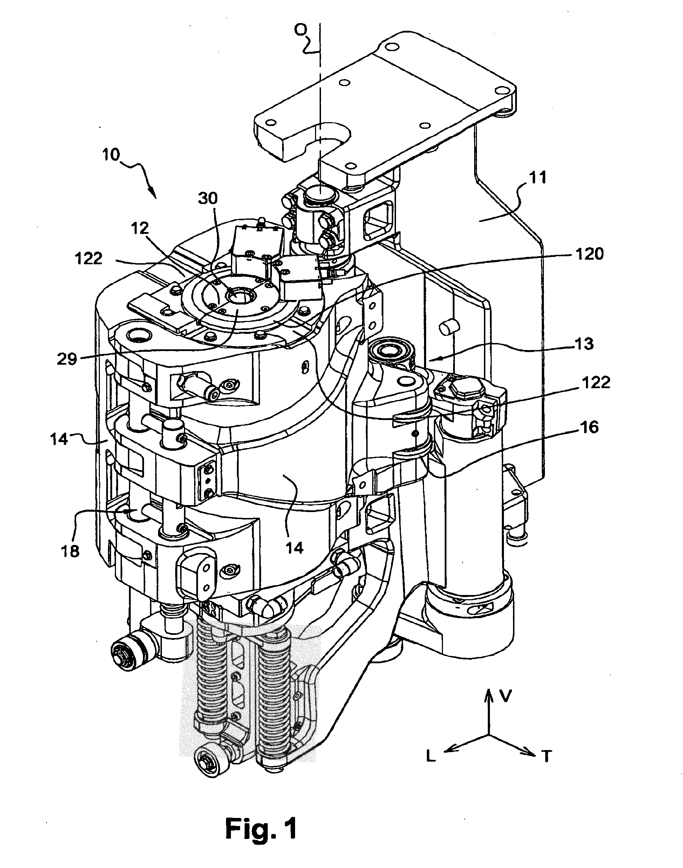

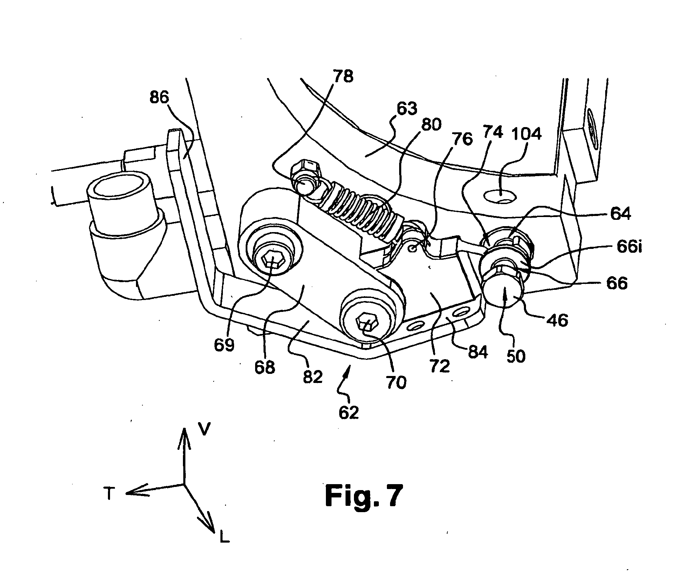

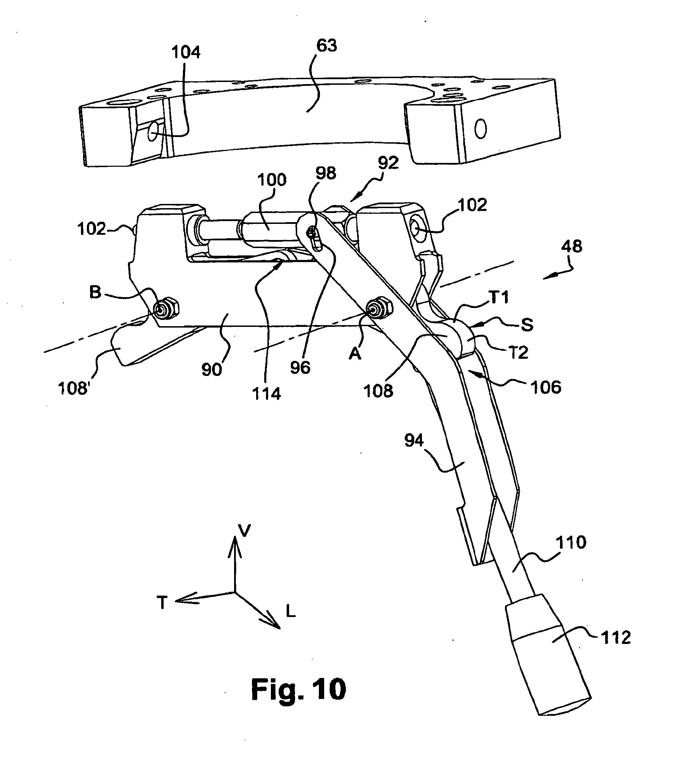

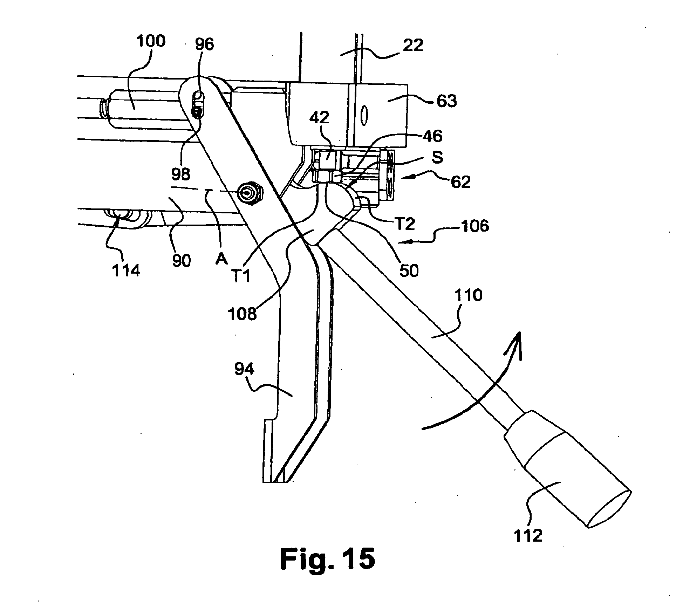

On décrira maintenant un premier mode de réalisation des moyens de fixation selon l'invention tel que représentés aux figures 1 à 6, ainsi qu'un exemple de réalisation d'un système de verrouillage aux figures 7 à 9 et d'un dispositif d'actionnement aux figures 10 à 15.

On a représenté à la figure 1, un dispositif de moulage 10 pour une machine de fabrication (non représentée) de récipients en matière thermoplastique, le dispositif de moulage 10 porté par une console 11 formant par exemple une partie d'un poste de formage d'une telle machine de soufflage.

La machine de soufflage comporte un carrousel circonférentiellement pourvu d'un nombre "N" déterminé de poste de formage comportant des moyens (non représentés) associés au dispositif de moulage 10 pour la transformation de la préforme en récipient, par exemple des moyens de soufflage ou d'étirage-soufflage agencés au dessus du dispositif de moulage 10.

Le dispositif de moulage 10 est donc destiné à équiper une machine de fabrication de récipients en matière thermoplastique par formage d'une préforme préalablement chauffée au moyen d'un fluide sous pression, en particulier des bouteilles.

Le dispositif de moulage 10 représenté à la figure 1 ne constitue toutefois qu'un exemple non limitatif du type de dispositif de moulage 10 qui, équipant une telle machine de type "rotatives", est susceptible de recevoir application des moyens de fixation réalisés selon les enseignements de l'invention.

Comme on peut le voir sur la figure 1, le dispositif de moulage 10 comporte au moins un moule 12 constitué de deux demi-moules, respectivement une demi-moule gauche et un demi-moule droit.

Les deux demi-moules formant le moule 12 sont destinés à être respectivement supportés par deux porte-moules 14, également respectivement gauche et droit, qui sont montés mobiles l'un par rapport à l'autre autour d'un axe O de rotation.

Le dispositif de moulage 10 comporte à cet effet un dispositif de fixation comportant des moyens de fixation qui sont aptes à fixer de manière démontable aux porte-moules 14 chaque demi-moule occupant une position montée ou position centrale de référence.

Le dispositif de moulage 10 illustré à la figure 1 est destiné à équiper un poste de soufflage d'une machine de fabrication de type "rotative", c'est-à-dire comportant généralement un carrousel à la circonférence duquel sont disposés des postes comprenant chacun un dispositif de moulage 10 associé par exemple à des moyens de soufflage ou d'étirage-soufflage (non représentés).

S'agissant des moyens de formage tels que des moyens de soufflage ou d'étirage-soufflage précités, encore parfois appelés et réalisés sous la forme d'une tuyère de soufflage, on se reportera à titre d'exemple au document FR-2.764.544 pour de plus amples détails.

Dans l'exemple représenté, les porte-moules 14 sont constitués sous la forme de deux structures porteuses montées pivotantes autour d'un axe O commun de rotation, l'axe O de rotation s'étendant ici verticalement selon le trièdre (L, V, T).

Chaque porte-moule 14 comporte, selon la direction longitudinale, une partie arrière qui est complémentaire de la partie arrière de l'autre porte-moule et qui est conformée pour s'interpénétrer avec cette dernière afin de former une articulation 13, telle une charnière dont les deux ferrures seraient toutefois pivotantes autour de l'axe O de rotation.

En variante, seulement l'un des porte-moules est monté mobile tandis que l'autre porte-moule est fixe, le porte-moule mobile étant commandé en déplacement entre lesdites positions ouverte ou fermée.

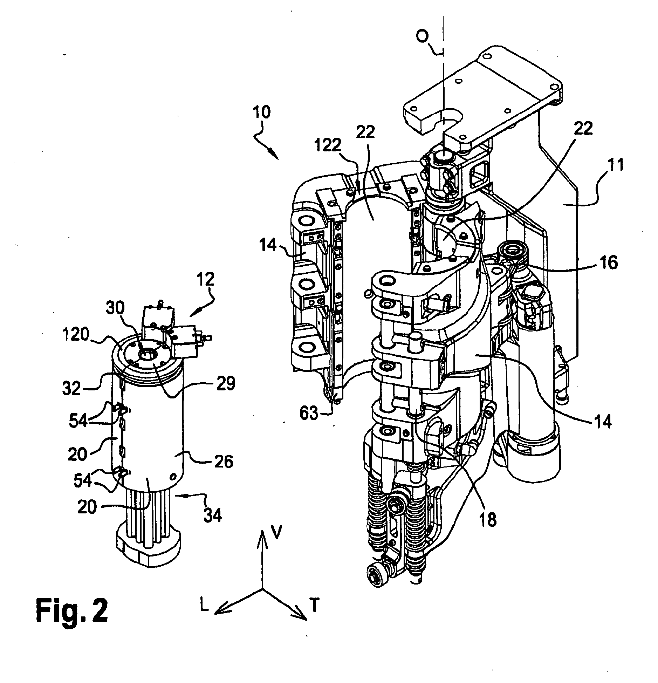

Les porte-moules 14 sont dès lors susceptibles de s'écarter mutuellement l'un de l'autre en pivotant respectivement autour de l'axe O et sont en conséquence montés mobiles en rotation entre au moins une position fermée (figure 1) et une position ouverte (figure 2).

En raison de la cinématique des porte-moules 14, un tel dispositif de moulage 10 est encore appelé moule "portefeuille" (ou *"book-like opening" en anglais).*

De manière connue, l'entraînement des porte-moules 14 entre les positions ouverte et fermée est obtenu par un système de bras 16 de traction (voir figure 2) dont une extrémité est montée articulée sur les porte-moules 14 et dont l'autre extrémité est reliée à des moyens de commande associés, de préférence du type à galet et à came.

Une articulation des porte-moules 14 de ce type et des moyens de commande en ouverture et en fermeture associés sont par exemple décrits dans le document WO-A1-2004/018181 auquel on se reportera avantageusement pour de plus amples détails.

Le dispositif de moulage 10 comporte encore un verrou 18 qui, agencé longitudinalement en partie avant, soit à l'opposé de l'articulation pivotante autour de l'axe O de rotation, est destiné à assurer le verrouillage des deux porte-moules 14 en position fermée.

Un tel verrou 18 est également connu et ne sera donc pas décrit plus en détail, ledit verrou 18 ayant notamment pour fonction de prévenir toute ouverture inopinée lors des opérations de transformation par injection d'un fluide sous pression, tel que de l'air sous pression dans le cas du soufflage, pour lesquelles les pressions finales peuvent atteindre 40 bars.

Pour de plus amples détails sur la structure et le fonctionnement d'un verrou 18, on pourra par exemple se reporter au document FR-2.646.802.

Bien entendu, il ne s'agit que d'un exemple car il existe de nombreux verrous différents mais équivalents susceptibles d'assurer la fonction de verrouillage.

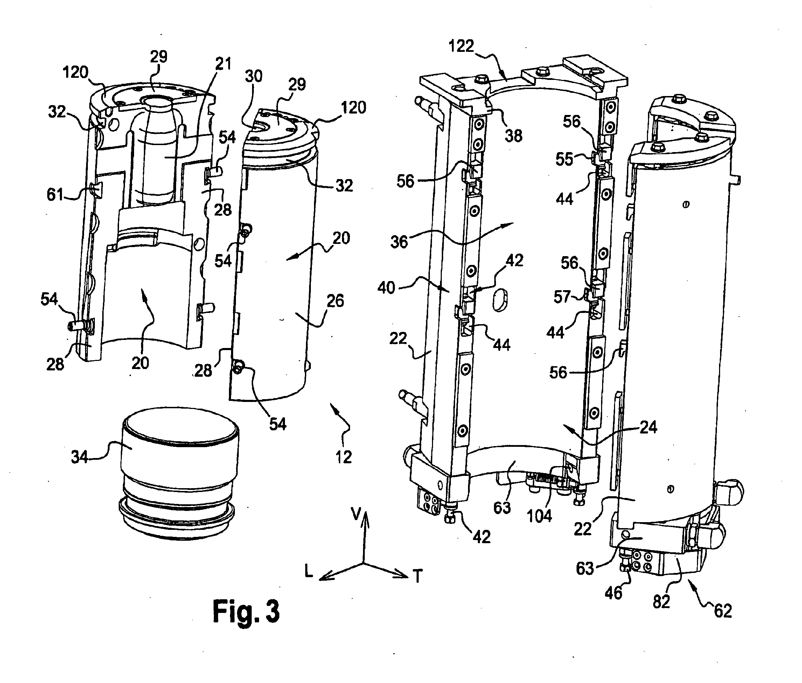

De préférence et tel qu'illustré à la figure 3, le dispositif de moulage 10 est ici du type dans lequel chaque demi-moule du moule 12 est réalisé en deux parties distinctes, respectivement une coquille 20 munie de la demi-empreinte 21 du récipient à fabriquer et un porte-coquille 22 destiné à supporter la coquille 20 et apte à être lui-même solidarisé à l'un des porte-moules 14.

Une telle conception du moule 12 présente de nombreux avantages notamment décrits dans le document EP-B1-0.821.641 précité.

En variante, chaque demi-moule est néanmoins susceptible d'être réalisé en une seule pièce soit monobloc, apte à être fixée sur l'un des porte-moules 14 par des moyens de fixation.

Chaque coquille 20 comporte une demi-empreinte 21 du récipient final qui est réalisée en creux dans une face interne 24. Chaque face interne 24 est ici une face plane verticale qui est formée par la face de section du cylindre formant le moule 12.

Au cours de la fabrication, lorsque les faces internes 24 sont accolées l'une à l'autre selon un plan vertical de moulage pour former l'empreinte du récipient à fabriquer, les coquilles 20 (ou demi-moules) indépendantes l'une de l'autre sont alors dites en position jointe.

Chaque coquille 20 comporte une face externe 26, opposée à la face interne 24, qui présente globalement la forme d'un demi-cylindre de révolution sensiblement coaxial à l'axe X de l'empreinte du récipient qui s'étend verticalement.

Avantageusement, il est prévu des moyens de centrage de manière à recentrer angulairement le moule 12 par rapport aux porte-moules 14, tels qu'un pion saillant à partir de la face externe 26 de la coquille 20 destiné à pénétrer dans un trou complémentaire de la face interne du porte-coquille 22.

Chaque coquille 20 présente deux bords 28, rectilignes et d'orientation verticale, par lesquels se relient les faces interne 24 et externe 26 de la coquille 20.

Lorsque les porte-moules 14 sont en position fermée, les deux coquilles 20 réunies ensemble déterminent une face supérieure horizontale présentant centralement une ouverture 30 destinée à permettre l'introduction de la préforme.

De préférence, la face supérieure de chaque coquille 20 est formée par une plaque 29 distincte, rapportée solidairement sur chaque coquille 20. En position fermée, les plaques 29 réunies déterminent une surface horizontale, surface avec laquelle est destinée à venir en contact l'extrémité inférieure d'une tuyère (non représentée) comprenant les moyens de soufflage ou d'étirage-soufflage.

Les coquilles 20 comportent encore dans leur partie supérieure, juste en dessous de la face supérieure horizontale, une rainure 32 qui s'étend circonférentiellement de manière continue autour des deux coquilles 20 lorsqu'elles sont réunies pour obtenir l'empreinte.

Lorsque le récipient à fabriquer présente un fond de forme complexe, en particulier pétaloïde, des problèmes de démoulage sont alors susceptibles de survenir.

C'est la raison pour laquelle, on prévoit avantageusement un fond de moule séparé, distinct des demi-moules ou comme dans l'exemple de réalisation représenté sur la figure 3 distinct des coquilles 20, ledit fond de moule comportant une empreinte (non représentée) du fond du récipient complémentaire des demi-empreintes 21.

Avantageusement, les formes de la coquille 20 et du porte-coquille 22 sont complémentaires de manière que le contact de la face externe 26 de la coquille 20 et de la face interne 36 du porte-coquille 22 soient en totalité ou en partie en contact, plaquée l'une contre l'autre, en particulier pour permettre un transfert thermique par conduction transversalement vers l'extérieur, c'est-à-dire de la coquille 20 vers le porte-coquille 22.

Avantageusement, chaque porte-coquille 22 est muni de conduits intérieurs et de raccords associés afin de permettre la mise en circulation d'un fluide de refroidissement (ou de chauffage) dans le porte-coquille 22 comportant la paroi interne 36 contre laquelle est plaquée la coquille 20.

Avantageusement, le dispositif de moulage 10 comporte encore des moyens de positionnement intervenant, entre le porte-coquille 22 et la coquille 20 formant ensemble un demi-moule, notamment par coopération de formes telles que des nervures/gorges coopérant ensemble pour assurer au moins un positionnement selon la direction verticale.

Dans l'exemple de réalisation, le dispositif de moulage 10 comporte une pièce supérieure, ici solidaire du porte-coquille 22, dont un bord interne 38 pénètre dans la rainure circulaire 32 de chaque coquille 20.

Le dispositif de moulage 10 comporte un dispositif de fixation muni de moyens de fixation 40 aptes à fixer de manière démontable au porte-moule 14 chaque demi-moule occupant une position montée ou centrale de référence.

Dans l'exemple de réalisation, le porte-coquille 22 - bien qu'amovible - reste monté à demeure sur le porte-moule 14 et solidaire de celui-ci dès lors que seul le démontage de chaque coquille 20 comportant la demi-empreinte 21 est nécessaire pour procéder à un changement de moule, par exemple en vue de la fabrication d'un autre récipient.

En conséquence, le dispositif de moulage 10 comporte également des moyens de liaison réversible intervenant entre chaque porte-moule 14 et le porte-coquille 22 pour les fixer solidairement ensemble.

Plus précisément, les moyens de fixation 40 précités sont en conséquence ceux destinés à bloquer la coquille 20 sur le porte-coquille 22 puisque dans le présent exemple le demi-moule est réalisé en deux parties distinctes (et non monobloc).

Ainsi, dans le cas d'un dispositif de moulage 10 comportant pour chaque porte-moule 14 et un demi-moule du moule 12 monobloc associé, les moyens de fixation 40 interviennent alors pour fixer chaque demi-moule directement au porte-moule 14.

Conformément à l'invention, les moyens de fixation 40 du dispositif de fixation de chaque demi-moule au porte-moule 14 sont aptes à être commandés en déplacement entre au moins une position de fixation et une position de libération lorsque les porte-moules 14 sont en position fermée.

Les moyens de fixation 40 de chaque demi-moule, ici chaque coquille 20, au porte-moule 14 sont aptes à être commandés sélectivement pour fixer ou libérer chaque demi-moule ou coquille 20 lorsque les porte-moules 14 sont en position fermée.

Avantageusement, les moyens de fixation 40 selon l'invention sont en particulier aptes à autoriser, suivant un mouvement de translation, une introduction ou une extraction d'un sous-ensemble unitaire formé d'au moins les demi-moules assemblés.

On décrira maintenant à titre non limitatif un premier mode de réalisation de tels moyens de fixation selon l'invention.

Les moyens de fixation 40 de chaque demi-moule au porte-moule 14, c'est-à-dire dans l'exemple de chaque coquille 20 sur le porte-coquille 22, sont de type mécanique et résultent de la coopération de formes entre deux éléments liés respectivement à chacune des pièces.

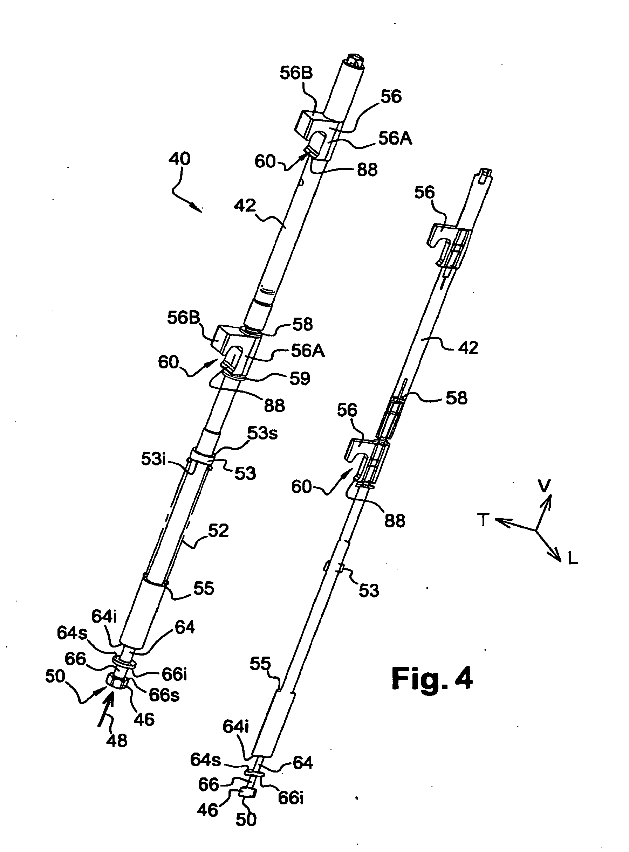

Avantageusement, les moyens de fixation 40 comportent au moins un organe d'actionnement 42 qui est représenté en détail à la figure 4, respectivement en perspective et en coupe selon un plan vertical.

Avantageusement, l'organe d'actionnement 42 comporte au moins une partie de commande 46 qui est apte à être commandée en déplacement depuis l'extérieur du dispositif de moulage 10, c'est-à-dire sans nécessairement requérir que les porte-moules 14 soient en position ouverte pour autoriser l'accès aux moyens de fixation 40.

Grâce au fait que la commande des moyens de fixation s'effectue quelle que soit la position ouverte ou fermée des porte-moules 14 du dispositif de moulage 10, on s'affranchit de l'obligation d'ouvrir les porte-moules comme cela était auparavant obligatoire et peu pratique pour atteindre les moyens de fixation.

De préférence, l'organe d'actionnement 42 est porté par le dispositif de moulage 10, plus précisément par le demi-moule ou ici par le porte-coquille 22.

En variante, l'organe d'actionnement 42 pourrait également être porté par la coquille 20. Toutefois, on cherche généralement à concevoir le dispositif de moulage 10 de manière à avoir un moule 12 qui soit aussi simple que possible et par conséquent de moindre coût de fabrication.

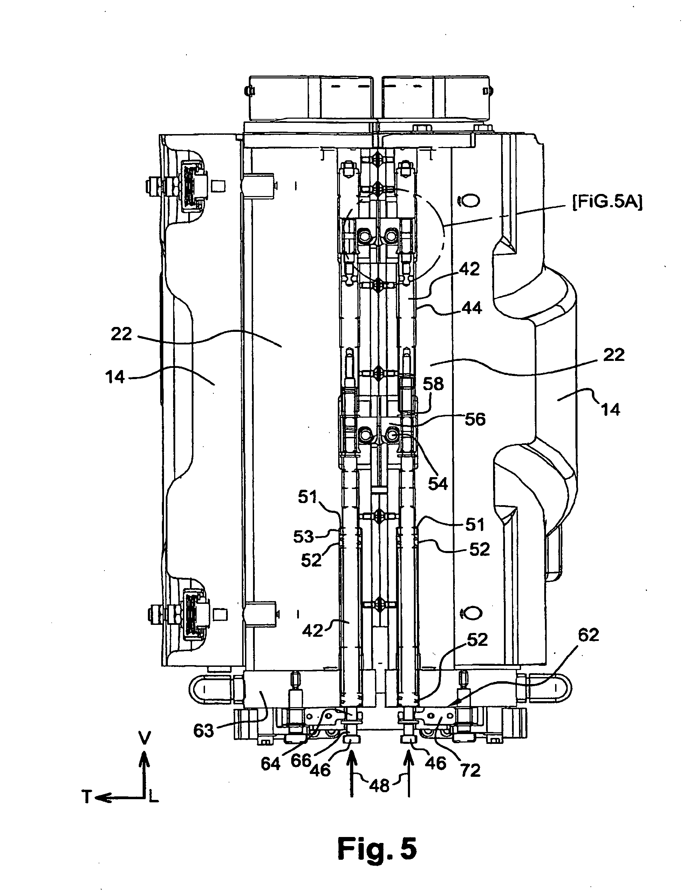

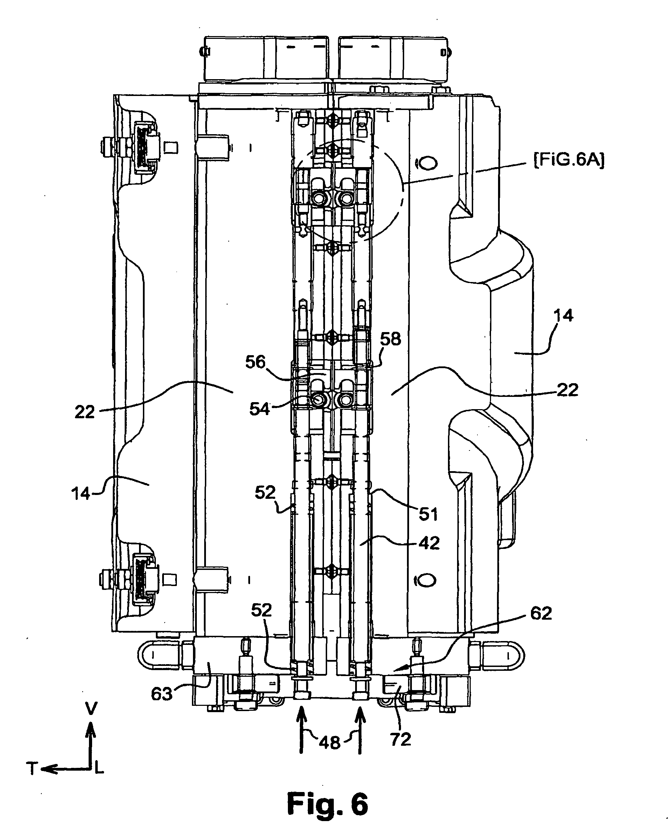

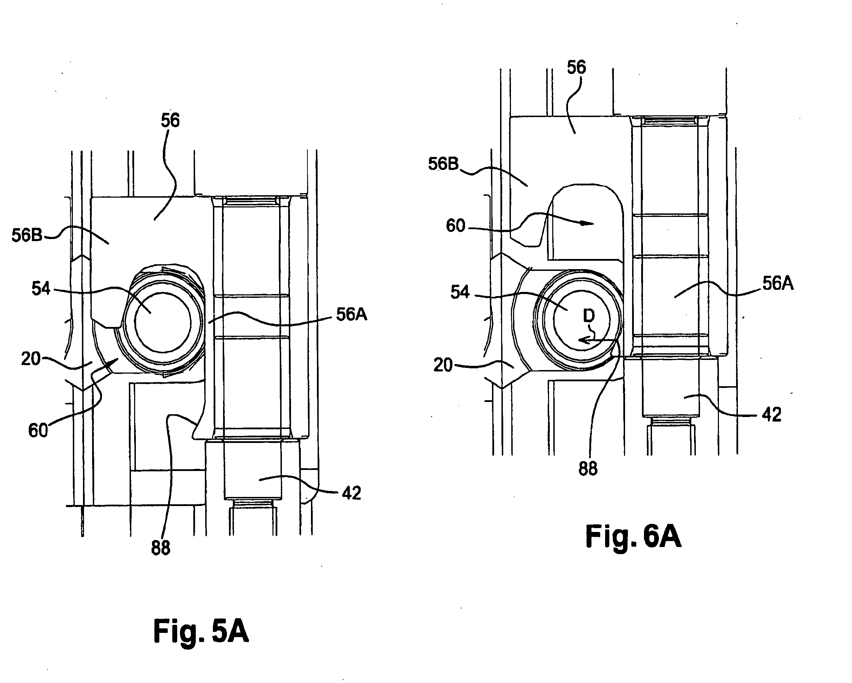

L'organe d'actionnement 42 portant les moyens de fixation 40 est monté mobile entre au moins une position de fixation et une position de libération qui sont respectivement représentées aux figures 5 et 6.

L'organe d'actionnement 42 est porté par le dispositif de moulage 10, de préférence monté sur le porte-coquille 22 dans chaque bord duquel est aménagé à cette fin au moins un logement 44 complémentaire.

Avantageusement, les moyens de fixation 40 sont agencés sur au moins un côté à l'interface des bords, ici verticaux, du porte-coquille 22 et de la coquille 20 respectivement (du porte-moule et du demi-moule dans une réalisation en deux parties).

Les moyens de fixation 40 et en particulier ici l'organe d'actionnement 42 sont intégrés dans le dispositif de moulage 10 de manière que celui-ci soit notamment compact.

En effet, il importe pour une machine de soufflage rotative que chaque dispositif de moulage présente un encombrement réduit afin de permettre l'implantation du plus grand nombre de postes sur la circonférence du carrousel de la machine et ce sans aucun risque d'interférences au moment de l'ouverture d'au moins un des dispositifs de moulage 10 qui y sont juxtaposés côte à côte.

L'organe d'actionnement 42 des moyens de fixation est en particulier caractérisé par le fait qu'il est apte à être commandé lorsque les porte-moules 14 sont en position fermée.

De préférence, la partie de commande 46 que comporte l'organe d'actionnement 42 s'étend en saillie hors du logement 44, à l'extrémité inférieure du porte-coquille 22.

L'organe d'actionnement 42 des moyens de fixation 40 représenté en détail à la figure 4 présente globalement la forme d'une tringle.

L'organe d'actionnement 42 des moyens de fixation 40 comporte une tige dont un tronçon inférieur constitue la partie de commande 46 du déplacement de l'organe d'actionnement 42.

Avantageusement, l'organe d'actionnement 42 des moyens de fixation 40, ici par l'intermédiaire de la partie de commande 46, est apte à être commandé en déplacement depuis l'extérieur du dispositif de moulage 10 pour provoquer la libération ou la fixation de chaque demi-moule au porte-moule par les moyens de fixation et cela et cela quelle que soit la position ouverte ou fermée des porte-moules 14 du dispositif de moulage 10.

De préférence, lorsque l'organe d'actionnement 42 est monté dans son logement 44, la partie de commande 46 fait saillie à l'extérieur du dispositif de moulage 10, c'est-à-dire s'étend au moins en partie à l'extérieur du logement 44 du porte-coquille 22, de manière à permettre la commande en déplacement dudit organe d'actionnement 42 par des moyens d'actionnement d'un dispositif d'actionnement agencés également à l'extérieur, ici en dessous du dispositif de moulage 10.

En variante non représentée, l'organe d'actionnement 42 est commandé en déplacement depuis l'extérieur du dispositif de moulage 10 sans pour autant que la partie de commande 46 fasse saillie.

A titre d'exemple non limitatif d'une telle variante, la partie de commande 46 de l'organe 42 pourrait être agencée à l'intérieur du logement 44 du porte-coquille 22 ou d'une autre pièce solidaire de sorte que les moyens d'actionnement sont alors conçus pour pénétrer depuis l'extérieur au sein du dispositif afin d'agir sur ladite partie de commande 46.

Bien entendu, il est possible que les moyens d'actionnement soient également intégrés au porte-coquille 22, tout cela procédant en partie du choix du dispositif de commande comportant lesdits moyens d'actionnement.

En effet, l'organe d'actionnement 42 des moyens de fixation 40 est apte à être commandé sélectivement par un dispositif de commande 48 comportant des moyens d'actionnement 106 pour en provoquer le coulissement entre lesdites positions de fixation et de libération des moyens de fixation 40 de chaque coquille 20.

De préférence, l'organe d'actionnement 42 coulisse verticalement entre lesdites positions de fixation et de libération.

En variante non représentée, l'organe d'actionnement 42 est agencé suivant une autre orientation, par exemple pour coulisser selon la direction transversale, dans un plan horizontal orthogonal à la direction verticale.

Toutefois, l'organe d'actionnement 42 est susceptible d'être monté mobile entre les positions de fixation et de libération suivant une autre cinématique qu'en coulissement.

En variante non représentée, l'organe d'actionnement 42 est monté mobile en rotation entre les positions de fixation et de libération tout en agissant sur les moyens de fixation.

Avantageusement, le dispositif de commande 48 comporte des moyens d'actionnement 106 qui coopèrent avec une surface de commande 50 que comporte la partie de commande 46, à l'extrémité libre du tronçon inférieur, de l'organe d'actionnement 42.

De préférence, les moyens de fixation 40 comportent des moyens de rappel élastique 52 qui sollicitent l'organe d'actionnement 42 vers la position de fixation de sorte que ledit organe 42 est rappelé automatiquement vers ladite position de fixation.

On a représenté schématiquement sur les figures 4, 5 et 6 le dispositif de commande 48 par une flèche.

L'organe d'actionnement 42 monté dans le logement 44 du porte-coquille 22 est apte à coulisser à l'encontre d'un organe de rappel élastique 52, tel qu'un ressort de compression.

Le ressort de rappel élastique 52 est monté autour de l'organe d'actionnement 42 qui en traverse les spires, par exemple autour du tronçon inférieur de l'organe 42 et disposé verticalement au dessus de la partie de commande 46 située à l'extrémité inférieure.

Comme on peut mieux le voir sur les coupes des figures 5 et 6, l'extrémité supérieure du ressort de rappel élastique 52 est en appui contre une face inférieure 53i d'une bague 53, laquelle bague 53 est destinée à prendre appui par sa face supérieure 53s contre un épaulement 51 prévu à cet effet dans le logement 44 et l'extrémité inférieure du ressort 52 coopère avec une face supérieure d'un épaulement 55 de l'organe d'actionnement 42.

Lorsque l'organe d'actionnement 42 est déplacé, au moyens d'un dispositif de commande 48, de la position de fixation illustrée à la figure 5 vers la position de libération illustrée à la figure 6, le ressort de rappel 52, qui est alors comprimé, exerce un effort de rappel orienté verticalement vers la bas sur l'épaulement 55 de l'organe d'actionnement 42.

En variante, l'organe d'actionnement 42 ne comporte pas de ressort de rappel élastique 52 de sorte que le coulissement de l'organe 42 entre ses positions de fixation et de libération est alors fonction de l'effort appliqué sur la partie 46 par les moyens d'actionnement 106 du dispositif de commande 48.

Avantageusement, les moyens de fixation 40 sont intégrés au dispositif de moulage 10 pour obtenir un dispositif compact.

Une telle compacité du dispositif de moulage est particulièrement importante pour une machine rotative où le nombre N de postes, pour un diamètre donné de carrousel, en découle en partie directement, car les postes ou dispositifs de moulage du type en portefeuille requièrent en effet un espace minimal entre deux postes consécutifs pour l'ouverture par rotation autour de l'axe O des porte-moules.

Avantageusement, les moyens de fixation 40 sont au moins en partie intégrés à l'intérieur du dispositif de moulage 10 et sont agencés entre le bord 28 de la coquille 20 (ou demi-moule) et le bord en vis-à-vis du porte coquille 22 (ou porte-moule), lesdits bords étant respectivement parallèles à l'axe O de rotation, de manière à fixer la coquille 20 (ou demi-moule) sur l'un et/ou l'autre de ses bords 28.

De préférence, les moyens de fixation 40 sont agencés, de part et d'autre de la demi-empreinte 21, sur chaque bord 28 de la coquille 20 (ou demi-moule), soit ici diamétralement opposé selon la direction longitudinale, au niveau du plan vertical de moulage ou plan joint.

Les moyens de fixation 40 comportent respectivement au moins un élément de fixation 54 qui est solidaire de chaque demi-moule, ici de chaque coquille 20, et au moins un autre élément de fixation 56 qui, complémentaire dudit élément 54, est apte à être déplacé par l'organe d'actionnement 42.

Dans ce mode de réalisation, ledit au moins un élément de fixation solidaire de chaque demi-moule est un premier élément de fixation 54 de type mâle, tel qu'un pion, et ledit au moins un autre élément de fixation 56 lié à l'organe d'actionnement 42 est un second élément de fixation de type femelle, tel qu'un crochet.

De préférence, ledit au moins un second élément de fixation 56 est porté par l'organe d'actionnement 42 de sorte que le coulissement de l'organe 42 entre les positions de fixation et de libération s'accompagne simultanément du déplacement du second élément de fixation 56.

En variante non représentée, le second élément de fixation 56 est porté par une autre pièce, telle que le porte-coquille 22 (ou le porte-moule 14) et par exemple disposé dans le logement 44, et le second élément 56 est monté mobile entre une première position et une deuxième position, respectivement dites par analogie de fixation de libération.

Dans une telle variante, l'organe d'actionnement 42 est avantageusement apte à provoquer le déplacement dudit second élément entre lesdites première et deuxième positions lorsqu'il est lui-même commandé en déplacement par un dispositif de commande 48 pour coulisser entre au moins deux positions correspondant à l'état de fixation ou libération des moyens de fixation 40.

Ainsi, les moyens de fixation 40 et plus particulièrement ledit au moins un second élément 56 est apte à être actionné entre les positions de fixation et de libération par l'organe d'actionnement 42.

Le premier élément de fixation 54 est par exemple constitué par un élément mâle tandis que le second élément est constitué par un élément femelle.

Dans l'exemple de réalisation illustré aux figures, le premier élément de fixation 54 est constitué par un pion tandis que le second élément de fixation 56 est constitué par un crochet de formes complémentaires dudit pion 54 avec lequel il est destiné à coopérer.

En variante, le premier élément de fixation 54 lié aux demi-moules est un élément femelle, par exemple un cran, tandis que le second élément de fixation 56 est un élément mâle, par exemple un ergot.

Avantageusement dans une telle variante, l'élément femelle correspondant au premier élément de fixation 54 est associé aux coquilles 20 (ou demi-moules) dans lesquelles un élément "en creux", tel qu'un cran, est par exemple obtenu par usinage. Ainsi, les coquilles 20 ou demi-moules qui sont fréquemment manipulées lors des opérations de changement de moules sont dépourvues de toutes parties saillantes naturellement plus exposées à subir des chocs notamment.

De préférence, lorsque l'élément femelle correspondant au premier élément de fixation 54 est associé à chaque coquille 20 (ou un demi-moule), il est encore possible de prévoir au moins deux types différents d'élément femelle.

Ainsi, au moins un bord d'une même coquille peut comporter deux types différents d'élément femelle de manière à permettre le montage et le démontage d'un moule sur un dispositif de moulage d'une machine donnée équipé d'un premier type de dispositif de fixation ou un autre équipé d'un deuxième type de dispositif de fixation comportant respectivement des seconds éléments "mâles" de fixation différents.

En variante, un bord d'une même coquille pourrait également comporter des éléments femelle ou des éléments mâle démontables pour autoriser respectivement une utilisation avec au moins deux dispositifs de fixation différents.

Avantageusement, une coquille 20 (ou un demi-moule) existant est donc susceptible d'être modifié, pour y ajouter un premier ou un second élément de fixation (par exemple un pion ou un cran) afin de permettre une polyvalence d'utilisation dans un dispositif de moulage d'un poste comportant un dispositif de fixation selon l'invention.

Bien entendu il ne s'agit que d'un exemple non limitatif dès lors que de nombreux éléments 54, 56 complémentaires peuvent être utilisés pour réaliser une telle coopération de formes propre à garantir la fixation entre chacune des deux pièces portant respectivement l'un des premier et second éléments.

De préférence et comme illustré par les figures 2 ou 3 pour le premier mode de réalisation, chaque coquille 20 comporte quatre pions 54, deux pions 54 respectivement supérieur et inférieur qui sont superposés l'un au dessus de l'autre et cela sur chacun des bords 28 de la coquille 20 qui comportent ainsi chacun une paire de pions 54.

De préférence, les pions 54 sont des éléments distincts qui sont rapportés solidairement sur chaque bord 28 de la coquille 20 laquelle comporte à cet effet un logement 61 plus particulièrement visible sur la figure 3 où l'un supérieur des pions 54 a été omis sur la coquille 20 de gauche.

Avantageusement, une telle coquille 20 présente une forme particulièrement simple qui est susceptible d'être obtenue par moulage sans surcoûts de fabrication et il est également possible de modifier aisément des coquilles 20 selon l'état de la technique en y réalisant les modifications nécessaires à l'implantation des pions.

De plus, les pions 54 sont alors susceptibles d'être réalisés dans un matériau choisi, distinct de celui utilisé pour la coquille 20.

En variante, les pions formant les premiers éléments de fixation sont toutefois susceptibles d'être réalisés venus de matière avec la coquille 20, c'est-à-dire réalisés en une seule pièce avec cette dernière.

Avantageusement, chaque coquille 20 comporte des premiers moyens 54 des moyens de fixation 40 qui sont agencés sur chacun de ses bords, diamétralement opposés.

Les moyens de fixation 40 comportent également deux organes d'actionnement 42 associés qui sont agencés chacun dans un logement 44 agencé sur chaque bord du porte-coquille 22.

Chaque organe d'actionnement 42 comporte deux crochets 56 formant les seconds éléments de fixation et qui sont associés respectivement à chaque paire de pions 54 porté par un bord de la coquille 20.

De préférence, chaque organe d'actionnement 42 comporte donc un crochet supérieur 56 et un crochet inférieur 56 destinés à coopérer avec des pions supérieur et inférieur 54.

Avantageusement, l'un des crochets 56 est relié audit organe d'actionnement 42 avec un jeu selon la direction verticale de coulissement, c'est-à-dire par une liaison à jeu présentant une capacité de déplacement relatif du crochet 56 par rapport à l'organe d'actionnement 42.

Pour former ladite liaison à jeu, le crochet inférieur 56 est de préférence lié à l'organe d'actionnement 42 avec interposition d'un organe élastique 58 formant un moyen de rattrapage de jeu apte à garantir le bon positionnement en position de fixation ou de libération de chaque crochet 56 avec le pion 54 associé, notamment en compensant les tolérances.

Grâce à une telle liaison, on garantit le bon positionnement du crochet inférieur 56 indépendamment de celle du crochet supérieur 56 relié fixement à l'organe d'actionnement 42.

Tel qu'illustré par la figure 4, l'extrémité supérieure de l'organe élastique 58 est en appui contre la face inférieure d'un épaulement que comporte l'organe d'actionnement 42 tandis que l'extrémité inférieure sollicite la face supérieure du crochet 56 agencé en dessous dudit ressort 58.

Le crochet inférieur 56 n'est donc pas fixe comme le crochet supérieur 56 et il est libre de se déplacer verticalement par rapport à l'organe d'actionnement 42, à l'encontre du ressort 58 et dans la limite d'un jeu ou débattement déterminé par une face supérieure de butée 59 qui est solidaire de l'organe d'actionnement 42 et avec laquelle le crochet inférieur 56 est susceptible de coopérer.

Chaque crochet 56 présente globalement une forme en "L" inversé comportant une première branche 56A d'orientation verticale liée à l'organe d'actionnement 42 et une deuxième branche 56B, orthogonale à la première et ici d'orientation transversale, qui délimite avec la première branche 56A un logement 60 globalement en "U" dans lequel un pion 54 complémentaire est destiné à s'engager en position de fixation.

Ainsi et tel que décrit précédemment en référence aux figures 5 et 6, la partie de commande 46 de chaque organe 42 est sollicitée sélectivement par des moyens d'actionnement 106 d'un dispositif de commande 48 pour provoquer le déplacement de l'organe d'actionnement 42 entre les positions de fixation et de libération.

La position de fixation correspond dès lors à la position des moyens de fixation 40 dans laquelle chaque crochet 56 coopère avec le pion 54 de la coquille 20 engagé dans le logement 60 et cela afin de plaquer la coquille 20 contre le porte-coquille 22.

Tandis que la position de libération correspond à la position dans laquelle chaque crochet 56 est escamoté afin de ne pas interférer avec le pion 54 de la coquille 20 occupant ladite position montée.

En position montée de la coquille 20, chaque pion 54 pénètre par une encoche 57 dans le logement 44 du porte-coquille 22 dans lequel est monté l'organe d'actionnement 42 portant les crochets 56 de fixation.

En position de fixation illustrée à la figure 5, chaque pion 54 est reçu dans le logement 60 du crochet 56 associé qui l'enserre et assure ainsi la fixation de la coquille 20 dans le porte-coquille 22 au moins selon la direction transversale.

En effet, outre les moyens de fixation 40, chaque coquille 20 est retenue verticalement par la coopération de formes entre le bord circulaire 38 lié au porte-coquille 22 avec la rainure 32 de la coquille 20.

Avantageusement, chaque crochet 56 assure la fixation en exerçant sur le pion 54 un effort de serrage correspondant à une force, dite d'attraction, présentant au moins une composante d'orientation transversale qui s'exerce sur le pion 54 de l'intérieur vers l'extérieur de manière à plaquer intimement la face externe 26 de la coquille 20 contre la face interne 36 du porte-coquille 22.

Grâce à la force d'attraction résultant de la coopération entre les pions 54 et les crochets 56 des moyens de fixation 40, la face externe 26 de la coquille 20 et la face interne 36 du porte-coquille 22 sont en contact de conduction thermique l'une avec l'autre, en tout ou en partie selon les applications.

Avantageusement, on obtient ainsi un transfert thermique satisfaisant vers le porte-coquille 22 pourvu des moyens de refroidissement par circulation de fluide.

Selon le premier mode de réalisation, le dispositif de moulage 10 comporte avantageusement un système de verrouillage 62 qui, associé aux moyens de fixation 40, est commandé sélectivement pour verrouiller l'organe d'actionnement 42 en position de fixation et/ou en position de libération.

On décrira maintenant de manière non limitative un exemple de réalisation d'un tel système de verrouillage 62 qui est plus particulièrement représenté aux figures 7 à 9.

Le système de verrouillage 62 est par exemple monté à l'extérieur sur une platine 63 agencée en partie inférieure du dispositif de moulage 10 et qui est solidaire du porte-coquille 22.

Le système de verrouillage 62 est adjacent à la partie de commande 46, le verrouillage étant de préférence réalisé sur le tronçon inférieur de l'organe d'actionnement qui, agencé verticalement juste au dessus de ladite partie de commande 46, s'étend également en saillie vers le bas hors du porte-coquille 22.

Tout d'abord, comme illustré à la figure 4, l'organe d'actionnement 42 comporte respectivement un premier cran 64 et un deuxième cran 66, en variante au moins un cran.

Les premier et deuxième crans 64 et 66 sont formés respectivement par une gorge annulaire qui est réalisée dans le tronçon inférieur de l'organe d'actionnement 42, verticalement au dessus de la partie de commande 46, le premier cran 64 étant lui-même agencé au dessus du deuxième cran 66.

Le premier cran 64 est délimité verticalement par une face inférieure d'appui 64i et par une face supérieure 64s, de même que le deuxième cran 66 est délimité par une face inférieure d'appui 66i et une face supérieure de butée 66s.

Le système de verrouillage 62 comporte un support 68 dont une première partie est fixée solidairement à la platine 63 par l'intermédiaire d'un premier organe de fixation 69, tel qu'une vis, et dont une deuxième partie est fixée solidairement à la platine 63 par l'intermédiaire d'un deuxième organe de fixation 70.

Le système de verrouillage 62 comporte au moins un élément de verrouillage 72 formé par un loquet qui est monté pivotant par l'intermédiaire de l'une de ses extrémités autour du deuxième organe de fixation 70 et dont l'autre extrémité libre de verrouillage comporte une encoche 74 de verrouillage de forme complémentaire des premier et deuxième crans 64, 66.

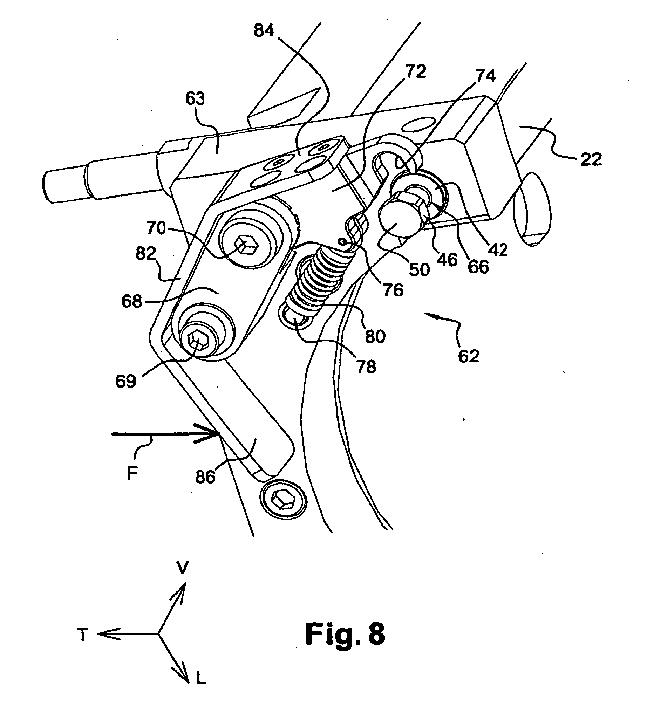

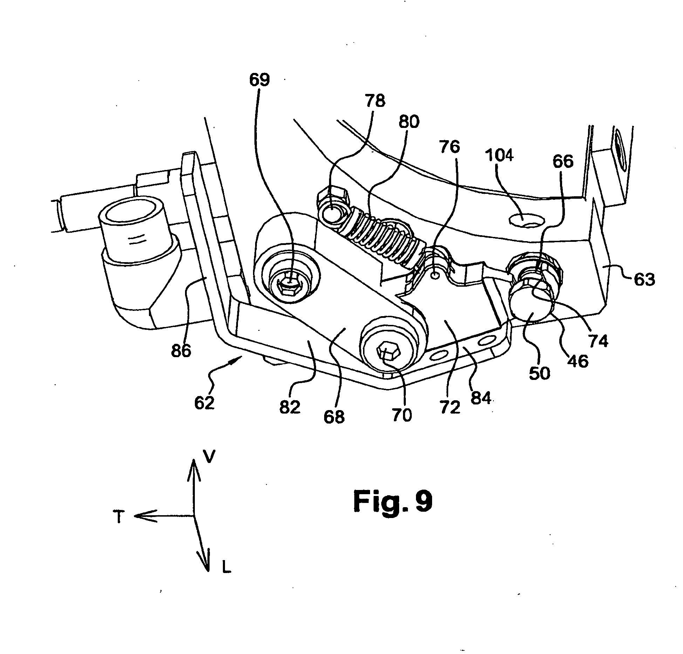

Le loquet de verrouillage 72 est monté mobile entre :
- une position déverrouillée illustrée à la figure 8 dans laquelle le loquet de verrouillage 72 est escamoté pour laisser l'organe d'actionnement 42 libre de coulisser entre ses positions de fixation et de libération, et
- une position verrouillée dans laquelle le loquet de verrouillage 72 coopère sélectivement avec le premier cran 64 (figure 7) ou avec le deuxième cran 66 (figure 9) de l'organe d'actionnement 42, lesdits crans 64, 66 correspondant respectivement à la position de fixation et à la position de libération de l'organe d'actionnement 42 des moyens de fixation 40.

Le loquet de verrouillage 72 comporte, entre lesdites extrémités, une patte 76 à laquelle est rattachée une extrémité d'un organe de rappel élastique 80, ici un ressort, dont l'autre extrémité est rattachée sur un plot 78 solidaire de la platine 63 et formant un point d'ancrage fixe.

Le système de verrouillage 62 comporte des moyens de commande 82 qui sont aptes à provoquer le déplacement du loquet de verrouillage 72 de la position verrouillée vers la position déverrouillée à l'encontre de l'organe de rappel élastique 80.

Ainsi, l'organe élastique 80 sollicite le loquet de verrouillage 72 en exerçant sur la patte 76 du loquet 72 un effort de rappel propre à rappeler automatiquement le loquet 72 vers la position verrouillée, dans l'un ou l'autre des crans 64, 66.

Les moyens de commande 82 du système de verrouillage 62 sont par exemple réalisés sous la forme d'une palette présentant globalement une forme en "U" ouvert.

La palette de commande 82 comporte une première partie 84 qui est rapportée à fixation, par exemple par vissage, sur la partie du loquet de verrouillage 72 opposée à la patte 76, et une partie intermédiaire qui se prolonge par une deuxième partie 86 formant l'extrémité libre de la palette de commande 82.

Le déverrouillage est obtenu en appliquant un effort de déverrouillage sur ladite partie 86 pour provoquer le pivotement du loquet de verrouillage 72 de la position de verrouillage vers la position de déverrouillage, à l'encontre de l'organe de rappel 80 du loquet 72.

Avantageusement, le support 68 forme une butée dite de fin de course contre laquelle une partie de la palette de commande 82 vient en appui lorsqu'un effort de déverrouillage est appliqué sur la partie 86 et qui correspond à une course suffisante pour garantir le déverrouillage du loquet 72 à l'encontre de l'organe de rappel 80.

De préférence, le système de verrouillage 62 est un système instable pour lequel le seul état stable correspond à la position verrouillée, ainsi le maintien du système en position déverrouillée ne peut être obtenu qu'en appliquant en permanence un effort de déverrouillage F suffisant sur la partie 86 de la palette de commande 82.

On a représenté schématiquement sur la figure 8 au moyen d'une flèche F un tel effort de déverrouillage. F appliqué sur la partie 86 de la palette de commande 82.

Si l'on cesse d'appliquer un tel effort ou que l'effort appliqué sur le loquet 72 par l'intermédiaire de la palette 82 est inférieur à l'effort de rappel exercé par l'organe de rappel élastique 80, ledit organe 80 rappelle alors automatiquement le loquet de verrouillage 72 en position verrouillée.

Comme on peut le voir sur les figures 7 et 9, lorsque le loquet de verrouillage 72 est en position verrouillée dans le premier cran 64, le loquet 72 est en appui contre la face inférieure d'appui 64i, de même que lorsque le loquet de verrouillage 72 est en position verrouillée dans le deuxième cran 66, le loquet 72 est en appui contre la face inférieure d'appui 66i.

Un système de verrouillage 62 tel que celui de l'exemple de réalisation qui vient d'être décrit en référence aux figures 7 à 9 est facultatif dès lors qu'il ne conditionne pas le fonctionnement des moyens de fixation 40 selon l'invention.

Cependant, un tel système de verrouillage 62 présente des avantages certains dont les principaux sont décrits ci-après.

Le système de verrouillage 62 permet tout d'abord de garantir la fixation de la coquille 20 au porte-coquille 22 et cela même si le ressort de rappel 52 qui sollicite l'organe d'actionnement 42 vers la position de fixation venait à connaître une défaillance, par exemple une rupture.

C'est la raison pour laquelle, l'organe d'actionnement 42 comporte le premier cran 64 permettant de verrouiller la position de fixation.

Ainsi qu'on l'aura compris, l'organe d'actionnement 42 pourrait par conséquent ne pas comporter un tel premier cran 64 mais uniquement un second cran 66 de telle sorte que seul la position de libération serait alors susceptible d'être verrouillée par le système de verrouillage 62.

Le système de verrouillage 62 permet ensuite, grâce au second cran 66 de verrouillage de l'organe d'actionnement 42 en position de libération, de n'exercer que temporairement et non de manière permanente l'effort de déverrouillage appliqué par les moyens d'actionnement 106 du dispositif de commande 48 sur la partie de commande 46.

En effet, le coulissement de l'organe d'actionnement 42 de la position de fixation à la position de libération s'effectue à l'encontre du ressort de rappel 52.

Ainsi, en l'absence d'un tel verrouillage de l'organe d'actionnement 42 une fois ladite position de libération atteinte, il serait nécessaire d'appliquer en permanence un effort de déverrouillage supérieur à l'effort de rappel du ressort 52 faute de quoi ce dernier provoquerait immédiatement le rappel de l'organe d'actionnement 42 vers la position de fixation.

Avantageusement, le verrouillage de l'organe d'actionnement 42 en position de libération permet de n'actionner que temporairement les moyens d'actionnement 106 du dispositif de commande 48 au bénéfice notamment d'une économie d'énergie.

Grâce au verrouillage de la position de libération, il est ensuite possible de manipuler chaque coquille 20, par exemple pour procéder à son changement, et cela indépendamment de la présence ou de l'absence d'un dispositif de commande 48, nul effort de déverrouillage ne devant plus être appliqué sur la partie de commande 46.

De plus, la fixation d'une nouvelle coquille 20 est alors susceptible d'être obtenue rapidement et simplement par l'actionnement de la palette 82, comme illustré à la figure 8, en provoquant le déverrouillage du système de verrouillage 62.

En effet, on commande alors automatiquement, en déverrouillant le loquet de verrouillage 72 et du fait de la présence du ressort 52, le rappel de l'organe d'actionnement 42 vers la position de fixation.

On remarquera que, là encore, la présence du dispositif de commande 48 n'est pas nécessaire.

En effet, le dispositif de commande 48 n'est mis en oeuvre dans le premier mode de réalisation représenté aux figures 1 à 15 que pour commander le coulissement de l'organe d'actionnement 42 de la position de fixation à la position de libération et jusqu'au verrouillage de l'organe d'actionnement 42 lorsque la position de libération est atteinte.

De plus, le deuxième cran 66 est plus "large", c'est-à-dire qu'il présente selon la direction verticale une dimension supérieure à celle du premier cran 64 dont les dimensions correspondent ici sensiblement à celles du loquet de verrouillage 72.

Avantageusement, le deuxième cran 66 de l'organe d'actionnement 42 et le loquet de verrouillage 72 sont conformés pour présenter, selon la direction verticale de coulissement, un jeu propre à autoriser un déplacement de l'organe 42 au-delà de la position de libération.

Grâce à quoi, on commande sélectivement, par l'intermédiaire des moyens d'actionnement 106 du dispositif de commande 48, des moyens de décollement 88 du demi-moule, ici de la coquille 20, par rapport au porte-moule 14.

Avantageusement, les moyens de décollement 88 sont constitués par une partie formant rampe qui est portée par chaque crochet 56 et qui est agencée sur la branche verticale 56A du crochet, à l'entrée du logement 60 pour le pion 54.

Comme illustré sur les figures 4 et 6, la rampe de décollement 88 du crochet 56 est apte à exercer sur le pion 54 un effort de décollement lorsque les moyens d'actionnement 106 sollicitent l'organe d'actionnement 42 pour le faire coulisser au-delà de la position de libération, suivant une surcourse déterminée par ledit jeu vertical du deuxième cran 66 correspondant à l'écartement entre la face inférieure d'appui 66i et la face supérieure de butée 66s.

On a représenté schématiquement par une flèche D la composante d'orientation transversale de la force correspondant à l'effort de décollement appliqué sur le pion 54 par la rampe 88 du crochet 56.

On décrira de manière non limitative au moins un exemple de réalisation d'un dispositif de commande 48 des moyens de fixation 40.

Le dispositif de commande 48 est par exemple de type "mécanique" et destiné à être commandé manuellement, c'est-à-dire manipulé directement à la main par un opérateur.

Bien entendu, les moyens d'actionnement 106 pourraient en variante être partiellement ou totalement automatisés, notamment en utilisant un actionneur, tel qu'un vérin ou un moteur commandant une tige.

De plus, un tel actionneur peut être de type pneumatique, hydraulique ou électrique pour fournir aux moyens d'actionnement 106 l'énergie nécessaire à l'application sur la partie de commande 46 de l'organe d'actionnement 42 d'un effort de libération des moyens de fixation 40 à l'encontre de l'organe de rappel élastique 52 de l'organe 42 vers la position de fixation.

Bien entendu, outre le dispositif de commande 48, il est également possible de procéder à l'automatisation de la commande du système de verrouillage 62, par exemple également au moyen de tels actionneurs, pour commander sélectivement le déverrouillage du loquet de verrouillage 72.

Avantageusement, le déverrouillage est alors commandé en synchronisation avec les moyens d'actionnement 106 du dispositif de commande 48 qui agissent sur l'organe d'actionnement 42.

La synchronisation de la commande des actionneurs du système de verrouillage 62 et du dispositif de commande 48 est alors pilotée de manière à déverrouiller le système 62 préalablement et pendant l'actionnement de l'organe 42 par les moyens d'actionnement 106 pour faire coulisser l'organe ainsi libéré de sa position de fixation jusqu'à la position de libération puis à verrouiller de nouveau le système 62 lorsque ladite position de libération est atteinte, une fois le verrouillage de l'organe 42 en position de libération l'actionnement du dispositif de commande 48 peut alors cesser.

A titre d'exemple non limitatif, le dispositif de commande mécanique est constitué par une sauterelle à tige coulissante, un tel dispositif bien connu est encore appelé *"toggle clamp" en* anglais.

Un tel dispositif est apte à transformer un mouvement de rotation en un mouvement de translation.

Les moyens d'actionnement 106 du dispositif de commande 48 selon cet exemple de réalisation sont représentés sur les figures 10 à 15.

Sur la figure 10, le dispositif de commande 48 est représenté à l'état libre, c'est-à-dire ici avant de procéder à sa mise en place par rapport au dispositif de moulage 10.

En effet, le dispositif de commande 48 est avantageusement un dispositif démontable qui n'est pas monté à demeure sur le dispositif de moulage 10.

Plus précisément, le dispositif de commande 48 est destiné à être monté sur la platine 63, en partie inférieure du dispositif de moulage 10, au voisinage de la zone où se trouve déjà implanté le système de verrouillage 62 de l'organe d'actionnement 42.

Le dispositif de commande 48 comporte un châssis 90 qui porte les différentes pièces, notamment en partie supérieure des moyens d'accrochage 92 du dispositif de commande 48 sur la platine 63 représentée seule à la figure 10 au dessus du dispositif de commande 48.

Les moyens d'accrochage 92 comportent un organe de commande 94 qui est monté pivotant autour d'un axe A de rotation agencé entre les extrémités dudit organe 94.

La première extrémité inférieure de l'organe 94 est libre afin de permettre d'agir sur l'organe et de provoquer son pivotement autour de l'axe A, la deuxième extrémité supérieure comporte une lumière oblongue 96 dans laquelle est engagé un pion 98.

Le pion 98 est solidaire du corps d'un moyen d'actionnement 100 qui est apte à commander le déplacement de deux doigts d'accrochage 102 qu'il comporte à chacune de ses extrémités.

Les deux doigts d'accrochage 102 sont montés mobiles entre une position d'accrochage du dispositif de commande 48 sur la platine 63 et une position escamotée correspondant à l'état libre du dispositif de commande 48.

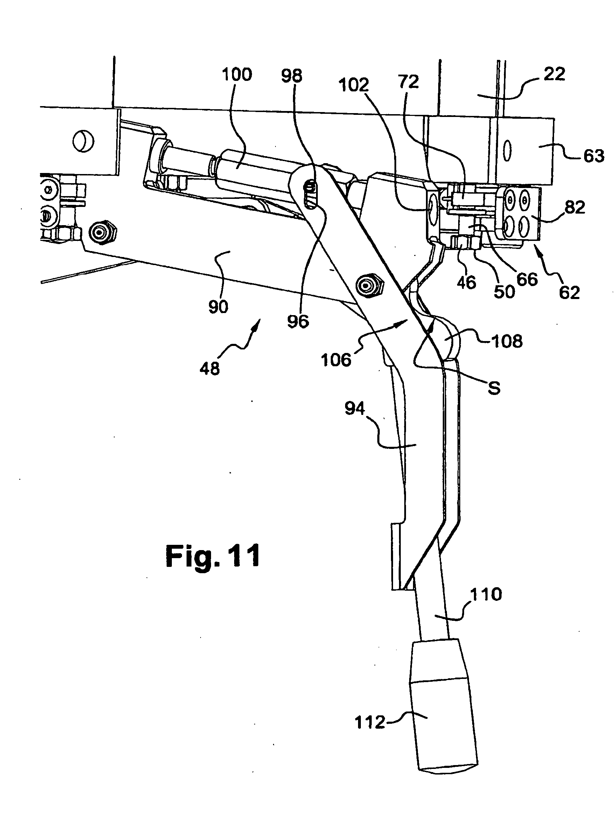

On décrira ci-après en référence aux figures 11 à 13, l'accrochage du dispositif de commande 48 à la platine 63, étape préalable à l'actionnement ultérieur de l'organe d'actionnement 42 par les moyens d'actionnement 106.

Le fonctionnement des moyens d'accrochage 92 est le suivant, le dispositif de commande 48 est de préférence amené tout d'abord à l'oblique tel qu'illustré par la figure 11.

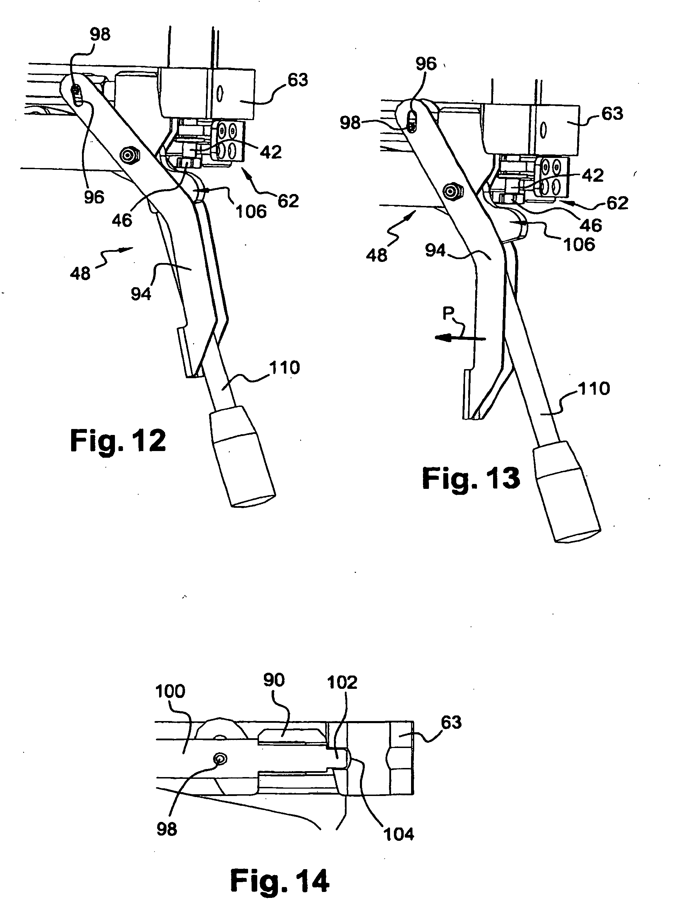

La partie arrière située du côté des moyens d'articulation 13 des porte-moules 14 est d'abord engagée, puis la partie avant, jusqu'à atteindre la position déterminée représentée à la figure 12, position à partir de laquelle l'accrochage du dispositif de commande 48 est alors obtenu en déplaçant l'organe de commande 94 des moyens d'accrochage 92 du dispositif de commande 48.

Le dispositif de commande 48 occupe alors une position dite de fonctionnement mais il est nécessaire de procéder à l'accrochage pour l'y maintenir et permettre à l'opérateur d'avoir ensuite de nouveau les mains libres.

Un effort de poussée suivant la flèche P est donc exercé sur l'extrémité libre inférieure de l'organe de commande 94, ici manuellement par un opérateur, et ceci pour provoquer le pivotement de l'organe de commande 94 autour de son axe A.

Le pivotement de l'organe de commande 94 provoque parallèlement le déplacement du pion 98 engagé dans la lumière 96 de l'organe 94 de sorte que le pion 98 se déplace alors simultanément de la position haute qu'il occupe sur la figure 12 représentant le dispositif de commande 48 en position avant accrochage vers une position basse qu'il occupe sur la figure 13 correspondant à l'accrochage du dispositif en position de fonctionnement.

Le pion 98 étant lui-même solidaire du moyen d'actionnement 100, le pivotement de l'organe de commande 94 qui provoque le déplacement du pion 98 dans la lumière 96, provoque également un déplacement en translation du moyen d'actionnement 100 qui va alors déplacer en translation chacun des doigts d'accrochage 102 depuis sa position escamotée jusqu'à sa position d'accrochage.

En position d'accrochage et tel qu'illustré tout particulièrement par la coupe de la figure 14, chaque doigt d'accrochage 102 pénètre dans un trou 104 complémentaire d'une pièce, ici de la platine 63, de manière à accrocher solidairement le dispositif de commande 48 à la platine 63.

Les moyens d'actionnement 106 du dispositif de commande 48 sont alors aptes à agir depuis l'extérieur du dispositif de moulage 10 sur au moins un organe d'actionnement 42 des moyens de fixation 40 dont la partie de commande 46 fait avantageusement saillie en vue de son actionnement par les moyens d'actionnement 106.

De préférence et tel qu'illustré par la figure 10, les moyens d'actionnement 106 comportent une came 108 qui est montée mobile en rotation par l'intermédiaire d'une première partie autour de l'axe A de pivotement porté par le châssis 90.

La came 108 comporte une autre partie, ici à l'opposé de la partie montée à rotation, qui est solidaire d'une extrémité d'un levier de commande 110.

De préférence, le levier de commande 110 comporte à son autre extrémité libre une poignée 112 destinée à faciliter sa manipulation par un opérateur.

En variante, l'extrémité libre du levier de commande 110 est susceptible d'être reliée à un actionneur pour commander sélectivement l'actionnement de l'organe 42 comme décrit précédemment.

La came 108 comporte une surface de came S destinée à coopérer avec la face inférieure de commande 50 de la partie de commande 46 de l'organe d'actionnement 42 pour provoquer sélectivement le coulissement de l'organe d'actionnement 42 entre les positions de fixation et de libération.

Pour ce faire, la surface S de la came 108 comporte au moins un premier tronçon de came T1 et un second tronçon de came T2.

Comme expliqué précédemment, chaque coquille 20 comporte de préférence des moyens de fixation 40 selon l'invention sur chacun de ses côtés, au voisinage de ses bords 28, de sorte que pour chaque coquille 20 il est nécessaire de commander non pas un mais deux organes d'actionnement 42.

En variante, il est cependant possible de ne prévoir de moyens de fixation que sur l'un des bords 28 de la coquille 20.

Dans une telle variante, la coquille 20 est alors maintenue en place sur l'autre bord 28 adjacent à l'axe O du dispositif de moulage 10 par d'autres moyens, par exemple par coincement entre des moyens complémentaires intervenant entre la coquille 20 et le porte-coquille 22, par exemple une oreille du porte-coquille 22 dans une encoche de la coquille 20.

Dans une telle variante, la cinématique d'introduction ou d'extraction d'une coquille s'effectue alors par un mouvement circulaire comme avec les moyens de fixation connus de l'état de la technique.

Une telle cinématique est opérée suivant ledit mouvement circulaire et s'accompagne de l'introduction successive du bord arrière 28 de la coquille 20 puis de l'autre bord 28 et cela alors que les porte-moules 14 sont impérativement en position ouverte.

Selon une mise en oeuvre préférée du premier mode de réalisation, chaque ensemble constitué d'une coquille 20 et son porte-coquille 22 est pourvu des moyens de fixation 40 selon l'invention sur chacun de ses deux bords pour permettre une introduction selon une cinématique différente et particulièrement avantageuse.

Ainsi, les moyens de fixation 40 selon l'invention permettent - lorsqu'ils sont disposés sur chaque bord - d'une part d'être commandés alors que les porte-moules 14 occupent la position fermée et, d'autre part, d'introduire ou d'extraire une coquille suivant un mouvement de translation globalement perpendiculaire au porte-moule 14.

Avantageusement, les moyens de fixation 40 sont donc doubles de sorte qu'il est nécessaire de commander le déplacement des deux organes d'actionnement 42 agencés pour immobiliser chacun des bords 28 de la coquille 20, et de préférence simultanément.

C'est la raison pour laquelle, les moyens d'actionnement 106 comportent avantageusement deux cames, respectivement référencées 108 et 108', qui aptes à commander le déplacement de chacun des deux organes d'actionnement 42 que comporte un porte-coquille 22.

La deuxième came 108' est montée mobile en rotation par l'intermédiaire d'une première partie autour d'un axe B de pivotement porté par le châssis 90 du dispositif de commande 48 et comporte une autre partie qui est reliée, avec une possibilité de déplacement relatif, par des moyens de liaison 114 avec une autre partie de la première came 108.

Ladite autre partie de la première came 108 s'étend ici au-delà de la partie montée autour de l'axe A, à l'intérieur du châssis 90 à l'opposé de la partie liée au levier 110.

Les moyens de liaison 114 assurent la transmission de mouvement entre la came 108 et la came 108' de manière que tout déplacement de la came 108 commandé par le pivotement du levier 110 est automatiquement renvoyé par la came 108'.

Les cames 108 et 108' sont de la sorte commandées simultanément en actionnant un unique moyen constitué par le levier de commande 110.

Un dispositif de moulage 10 comporte au moins dispositif de commande 48 du type de celui qui vient d'être décrit.

En effet, le dispositif de commande 48 est susceptible d'être décroché de la platine 63 après libération de la première coquille du moule 12 et afin de procéder à son accrochage sur la platine 63 de l'autre porte-coquille 22 et commander ainsi la libération de l'autre coquille 20 du moule 12.

De préférence, un dispositif de commande 48 tel que représenté aux figures 10 à 15 est respectivement associé à chacun des porte-coquilles 22 (ou porte-moules 14) pour commander les moyens de fixation 40 associés à chaque coquille 20 (ou chaque demi-moule) selon la conception en deux ou trois parties du dispositif de moulage 10.

On décrira maintenant les différentes étapes mises en oeuvre pour procéder au changement du moule 12 d'un dispositif de moulage 10 du type comportant des moyens de fixation 40 selon l'invention décrits précédemment et tel que représenté aux figures 1 à 15.

De préférence, le moule 12 est donc constitué de deux demi-moules réalisés en deux parties, à savoir pour chacun d'une coquille 20 et d'un porte-coquille 22 comme cela a été indiqué précédemment.

Plus précisément, on décrira ci-après un premier procédé de changement de moule et ensuite un deuxième procédé de changement de moule qui diffèrent notamment l'un de l'autre selon que l'actionnement de l'organe 42 pour commander les moyens de fixation 40 est respectivement réalisé alors que les porte-moules 14 du dispositif de moulage 10 sont en position ouverte dans le premier cas et en position fermée dans le second.

On décrira tout d'abord les différentes étapes du premier procédé de changement de moule qui sont mises en oeuvre alors que le dispositif de moulage 10 est en position ouverte.

De préférence, les différentes étapes en relation avec les moyens de fixation selon l'invention sont mises en oeuvre manuellement par au moins un opérateur mais ainsi qu'il a été dit précédemment certaines d'entres elles sont susceptibles d'être automatisées au moyen d'actionneur.

Une telle automatisation de la commande du système de verrouillage pour réaliser le déverrouillage du loquet et/ou encore l'actionnement de l'organe 42 permet avantageusement de réduire le temps nécessaire pour procéder à un changement de moule 12.

Selon ce premier procédé de changement de moule, l'opérateur procède manuellement au changement de moule d'un dispositif de moulage 10 en ôtant successivement, les unes après les autres, les parties du moule suivant un mode opératoire similaire à celui mis en oeuvre précédemment avec les moyens de fixation selon l'état de la technique.

Bien entendu, pour pouvoir procéder à l'ouverture du dispositif de moulage 10, on actionne préalablement ou simultanément le verrou 18 de fermeture des porte-moules 14 vers sa position déverrouillée afin de pouvoir écarter les porte-moules. 14 l'un de l'autre, le déverrouillage et l'ouverture étant réalisée par l'opérateur.

Dans ce premier procédé, la première étape (a) consiste à commander l'ouverture du dispositif de moulage 10, c'est-à-dire à faire pivoter les porte-moules 14 autour de l'axe O de rotation depuis la position fermée jusqu'à la position ouverte.

Pour pouvoir libérer une coquille 20 du porte-coquille 22 en vue de procéder à son changement lorsque ledit dispositif de commande 48 est du type de celui représenté aux figures 10 à 15, il faut qu'au moins un dispositif de commande 48 comportant les moyens d'actionnement 106 ait été préalablement accroché en position de fonctionnement.

Ce faisant, ledit dispositif de commande 48 étant en position de fonctionnement, chaque came 108, 108' est alors apte à venir coopérer avec la face de commande 50 de la partie de commande 46 de l'organe d'actionnement 42 lorsque le levier 110 est déplacé vers sa position active.

En effet, le dispositif de commande 48 suivant l'exemple de réalisation étant démontable, il n'est pas nécessairement accroché en permanence au dispositif de moulage 10 mais peut l'être uniquement lorsqu'on souhaite intervenir sur l'un des demi-moules et procéder au changement de moule.

De préférence et comme indiqué précédemment, le dispositif de moulage 10 comporte un dispositif de commande 48 pour chaque demi-moule, ici chaque coquille 20, pour un dispositif de moulage 10.

Lesdits dispositifs de commande 48 sont accrochés en position de fonctionnement au plus tard après l'ouverture, dans l'hypothèse où ils sont décrochés à la fin des opérations de montage/démontage et ne demeurent pas solidaires des platines 63.

Dans ce dernier cas, on comprendra qu'une paire de dispositifs de commande suffit pour procéder successivement à de multiples changements de coquilles (ou de demi-moules selon la conception du moule) lorsque les différents dispositifs de moulage 10 d'une machine "rotative" se succèdent dans une zone déterminée pour qu'il y soit, poste après poste, procédé au changement des moules.

Une deuxième étape (b) consiste donc à accrocher le dispositif de commande 48.

Bien entendu une telle deuxième étape (b) n'est mise en oeuvre que si le dispositif de commande 48 est du type de celui représenté aux figures 10 à 15 et dont on rappellera qu'il n'est qu'un exemple possible de réalisation, ou encore un dispositif de commande 48 similaire qui soit démontable et qui ait été démonté ou que l'on souhaite démonter.

Ainsi, dans le cas d'un dispositif de commande 48 qui serait monté à demeure sur la platine 63, une telle deuxième étape (b) serait sans objet.

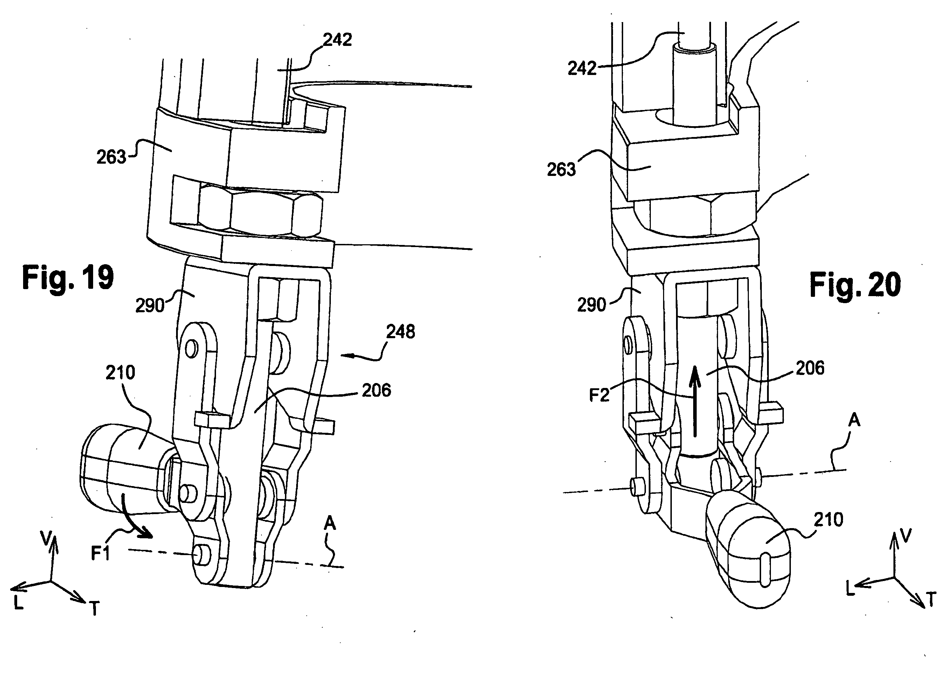

En variante, le dispositif de commande 48 (démontable ou non) n'est pas démonté mais reste solidaire de la platine 63, un tel dispositif de commande 48 est par exemple sous la forme d'une sauterelle du type de celle représentée aux figures 19 et 20.

Dans ce cas, chaque porte-coquille ou porte-moule est équipé du dispositif de commande 48 y compris lors de la fabrication de récipients au cours de laquelle il n'est pas utilisé

Selon une autre variante, le dispositif de commande 48 est solidaire du bâti de la machine comportant le dispositif de moulage 10.

De préférence, le dispositif de commande 48 est alors agencé dans une zone déterminée de manière à commander la machine en rotation et faire se succéder les dispositifs de moulage 10 dans ladite zone comportant le dispositif de commande 48.

Avantageusement, le dispositif de commande 48 est escamotable ou les moyens d'actionnement du dispositif le sont afin de ne pas interférer avec les porte-moules lorsque la machine fonctionne en mode de fabrication de récipients et non pas en mode d'intervention en vue du changement de moule.

Suivant le premier mode de réalisation, les moyens de fixation 40 comporte un ressort de rappel élastique 52 qui sollicite en permanence l'organe d'actionnement 42 vers la position de fixation, position dans laquelle les pions 54 sont engagés dans les logements 60 des crochets 56 et la coquille 20 fixée au porte-coquille 22 associé.

Si le dispositif de moulage 10 est pourvu d'un système de verrouillage 62 associé alors il faut préalablement procéder selon une troisième étape (c) au déverrouillage du système de verrouillage 62.

Selon cette troisième étape, on commande le système 62 pour dégager le loquet de verrouillage 72 du premier cran 64 de l'organe d'actionnement 42 afin que l'organe d'actionnement 42 puisse être déplacé en coulissement de sa position de fixation vers sa position de libération.

Avantageusement, on rappellera que le dispositif de moulage 10 comporte, pour chaque coquille 20 (ou demi-moule), comporte une double fixation, c'est-à-dire des moyens de fixation 40 agencés au niveau de chacun des bords 28 de la coquille 20 et des bords adjacents du porte-coquille 22 (ou porte-moule) associé.

Pour la troisième étape, l'opérateur exerce tout d'abord manuellement un effort de l'extérieur vers l'intérieur sur la partie 86 de chacune des palettes de commande 82 jusqu'à venir en butée contre le support 68.

Ce faisant, l'opérateur provoque le déverrouillage souhaité dans chaque système de verrouillage 62 associé à l'organe d'actionnement 42, c'est-à-dire le pivotement du loquet de verrouillage 72 autour de son axe jusqu'à la position déverrouillée et cela à l'encontre de l'organe de rappel élastique 80 du loquet 72 vers la position verrouillée.

En effet, chaque loquet 72, entraîné par la partie 84 de la palette dont il est solidaire, pivote vers la position déverrouillée dans laquelle l'encoche 74 du loquet 72 est libre, aucun des crans 64 ou 66 n'y étant plus engagé.

On observera que les parties 86 de chacune des palettes de commande 82 de chaque système de verrouillage associé respectivement à l'un et l'autre des organes d'actionnement 42 sont adjacentes et suffisamment proches l'une de l'autre pour que l'opérateur puisse les solliciter simultanément l'une et l'autre d'une seule main afin de provoquer le déverrouillage de chaque loquet de verrouillage 72.

Comme expliqué précédemment, le système de verrouillage 62 selon l'exemple de réalisation des figures 7 à 9 n'est pas un système bistable, c'est-à-dire que la position déverrouillée n'est pas une position stable de sorte que l'opérateur doit, avec une main, maintenir son effort sur les palettes de commande 82 au moins jusqu'à l'actionnement du levier 110 du dispositif de commande 48 (faute de quoi les loquets 72 seront automatiquement rappelés vers sa position verrouillée par les ressorts 80).

Une fois opéré le déverrouillage du système de verrouillage 62 suivant ladite troisième étape (c), l'organe d'actionnement 42 est alors libre d'être actionné par le dispositif de commande 48 afin de provoquer son coulissement, à l'encontre du ressort 52, de la position de fixation vers la position de libération.

Bien entendu, la troisième étape (c) est mise en oeuvre uniquement si le dispositif de moulage 10 comporte un tel système de verrouillage 62 qui bien qu'il puisse être supprimé présente différents avantages décrits précédemment.

Selon une quatrième étape (d), on commande le déplacement des moyens de fixation 40 de la position de fixation vers la position de libération.

Avec des moyens de fixation 40 selon le premier mode de réalisation, cela signifie la commande en coulissement des organes d'actionnement 42 de chaque coquille 20.

Pour ce faire, l'opérateur use de sa deuxième main pour actionner le levier 110 qu'il relève vers le haut afin de le faire pivoter de sa position de repos vers sa position active.

Lors de la course du levier 110 vers la position active, la partie de commande 46 de chacun des deux organes d'actionnement 42 associés à la coquille 20 va être sollicitée par la came 108, 108' correspondante suivant un effort de libération s'exerçant à l'encontre du ressort 52 et qui est propre à faire coulisser chaque organe 42 vers la position de libération.

La came 108' sollicite ici simultanément la partie de commande 46 de l'autre organe d'actionnement 42 agencé en arrière.

Plus précisément, la face de commande 50 de la partie de commande 46 coopère avec la surface S de la came 108 dont les tronçons T1 puis T2 sont successivement parcourus et conformés pour provoquer le coulissement de l'organe d'actionnement 42 vers la position de libération.

Lorsque la position de libération est atteinte, on procède selon une cinquième étape (e) au verrouillage de l'organe d'actionnement 42 en position de libération.

Pour ce faire, l'opérateur cesse d'exercer son effort sur les palettes de commande 82 mais en maintenant cependant encore le levier 110 en position active pour vaincre l'effort exercé par le ressort de rappel 52.

La cessation d'application de l'effort sur les palettes de commande 82 a pour effet que chaque loquet de verrouillage 72 de chaque système 62 est automatiquement rappelé vers sa position verrouillée et s'engage, du fait du coulissement de l'organe de commande 42 vers la position de libération, dans le deuxième cran 66 qui se trouve en vis-à-vis.

Le loquet de verrouillage 72 étant en appui contre la face inférieure d'appui 66i, l'organe d'actionnement 42 qui est en position de libération se trouve alors bloqué par le loquet de verrouillage 72 (position verrouillée).

Bien entendu une telle cinquième étape (e) n'est mise en oeuvre qu'en présence d'un système de verrouillage 62.

Avantageusement, la cinquième étape (e) est facilitée par le rappel automatique du loquet 72 vers la position verrouillée grâce à quoi le verrouillage est obtenu par simple relâchement de la palette 82 et sans qu'aucun effort supplémentaire ne soit nécessaire.

Suivant une sixième étape (f), soit l'opérateur cesse de maintenir le levier 110 en position active et relâche ce dernier lorsque l'organe d'actionnement 42 est verrouillé en position de libération par un système de verrouillage 62, soit l'opérateur maintien son effort sur le levier 110 et ce au moins jusqu'à ce que la coquille 20 soit démontée.

Bien entendu, selon le type de dispositif de commande 48 mis en oeuvre, il est possible que les moyens d'actionnement 106 soient maintenus en position active sans pour autant exiger l'application constante d'un effort sur le levier 110, tel sera notamment le cas si la position active du dispositif de commande 48 est une position stable.

S'il ne l'a pas déjà fait auparavant lors du déplacement du levier vers sa position active, l'opérateur va avantageusement effectuer une sollicitation supplémentaire sur le levier 110 afin de faire effectuer à l'organe d'actionnement 42 la surcourse propre à actionner les moyens de décollement que constituent la rampe 88 de chaque crochet 56.

Grâce à quoi, on s'assure du décollement de la coquille 20 par rapport au porte-coquille 22.

Selon une septième étape (g), on commande donc les moyens de décollement de la coquille 20 par rapport au porte-coquille 22.

Les différentes étapes relatives au démontage selon le premier procédé de changement de moule sont avantageusement réalisées par deux opérateurs dont l'un pourra se saisir et extraire la coquille 20 hors du porte-coquille 22 du dispositif de moulage 10 tandis que l'autre procédera aux manipulations, en particulier au déverrouillage avec une première main et à l'actionnement pour la libération de la coquille avec la seconde.

Après avoir successivement réalisé les différentes étapes pour ôter la première coquille 20, l'opérateur réitère les mêmes opérations pour procéder à l'extraction de la seconde coquille 20 et cela avant ou après avoir fixé une nouvelle coquille en lieu et place de la première coquille.

Les étapes du premier procédé sont également susceptibles d'être mises en oeuvre par un seul opérateur, en particulier en l'absence de système de verrouillage à actionner ou de rappel élastique du système 62 en position verrouillée.

Avantageusement, le maintien de l'organe d'actionnement 42 en position de libération est alors assuré directement par le dispositif de commande 48, et cela en présence ou en l'absence d'un ressort de rappel 52 de l'organe d'actionnement 42.

Bien entendu, outre le démontage de chacune des coquilles 20, l'opérateur procède également selon une étape supplémentaire au démontage du fond de moule 34.

Ainsi, le fond de moule 34 est séparé de sa sellette de support, après déconnection des branchements fluidiques.

De préférence, l'étape de démontage du fond de moule 34 est réalisée immédiatement après la première étape (a) d'ouverture des porte-moules 14 et avant les étapes suivantes de manière à libérer l'espace à l'intérieur du dispositif de moulage 10 et faciliter l'accès aux coquilles 20 pour l'opérateur.

Avantageusement, seules sont démontées les coquilles 20 munies chacune de la demi-empreinte 21 et qui, par comparaison aux porte-coquilles 22, sont plus légères et dépourvues de tout raccordement fluidique.

Chaque porte-coquille 22 reste en revanche monté et fixé au porte-moule 14 du dispositif de moulage 10.

Pour réaliser le montage d'une nouvelle coquille 20 dans chaque porte-coquille 22, on procède globalement aux mêmes étapes que celles décrites précédemment mais en les exécutant dans l'ordre inverse.

Suite aux étapes précitées de démontage, les moyens de fixation 40 sont en position de libération et sont maintenus dans cette position par le système de verrouillage 62 dont le loquet de verrouillage 72 est engagé en position verrouillée dans le deuxième cran 66 de chaque organe d'actionnement 42.

Pour le montage, on procède selon une huitième étape (h) à l'introduction et la mise en position d'une coquille 20.

Plus précisément, l'opérateur introduit, selon un mouvement de translation globalement perpendiculaire à l'un des porte-coquilles 22, une première coquille 20 et ce jusqu'à ce que ladite coquille 20 occupe la position montée dans laquelle elle est apte à être fixée au porte-coquille 22.

La position montée est atteinte lorsque les pions 54 pénètrent par les encoches 57 dans le logement 44 de l'organe d'actionnement 42 et sont correctement positionnés par rapport aux crochets 56.

Selon une neuvième étape (i), on commande les moyens de fixation pour les déplacer de la position de libération vers la position de fixation.

Dans le présent exemple, pour commander les moyens de fixation 40 et procéder à la fixation de la coquille 20 sur le porte-coquille 22, l'opérateur actionne les palettes de commande 82 afin de provoquer le déverrouillage des systèmes de verrouillage 62 dont le loquet 72 bloque l'organe d'actionnement 42 associé en position de libération.

Pour ce faire, il exerce un effort sur la partie 86 de chaque palette de commande 82 de manière à vaincre l'effort de rappel exercé par le ressort 80 et à provoquer le pivotement du loquet de verrouillage 72 vers sa position déverrouillée.

Le loquet 72 n'étant plus engagé dans le deuxième cran 66, chaque organe d'actionnement 42 est alors libre de pouvoir coulisser depuis la position de libération qu'il occupait vers la position de fixation.

Plus précisément, le coulissement de l'organe d'actionnement 42 s'effectue automatiquement grâce à l'organe de rappel élastique 52 qui sollicite en permanence l'organe 42 vers ladite position de fixation.

En position de fixation, les crochets 56 sont engagés autour des pions 54 grâce à quoi la coquille 20 est fixée par chacun de ses bords 28 au porte-coquille 22 et la face externe 26 de la coquille 20 plaquée par un effort d'attraction approprié contre la face interne 36 du porte-coquille 22.

Dès que les moyens de fixation 40 occupent la position de fixation, l'opérateur cesse avantageusement d'appliquer son effort sur la palette de commande 82 destiné à maintenir le système de verrouillage 62 en position déverrouillée.

Ce faisant, le loquet de verrouillage 72 se trouve rappelé automatiquement vers sa position verrouillée par le ressort 80 de manière que son encoche 74 se positionne dans le premier cran 64 en bloquant alors l'organe d'actionnement 42 dans la position de fixation.

Ainsi, même si le ressort 52 venait à casser l'organe d'actionnement 42 serait maintenu en position de fixation et le bon fonctionnement du dispositif de moulage 10 garanti.

Avantageusement, en présence d'un ressort de rappel 52, le dispositif de commande 48 comportant les moyens d'actionnement 106 n'intervient que lors des opérations de démontage d'une coquille 20 et non lors du montage et de la fixation d'une coquille 20 dans le porte-coquille 22 ce qui permet de réduire encore le temps d'intervention nécessaire.

Avantageusement, les moyens de fixation 40 selon l'invention permettent de réduire encore les temps d'intervention par au moins un opérateur pour procéder successivement au démontage et au montage des coquilles 20.

En effet, il résulte de la description qui vient d'en être faite que les moyens de fixation 40 sont commandés de manière particulièrement simple et rapide en agissant soit simultanément sur deux palettes de commande 82 ou encore en actionnant le levier 110.

En conséquence, les moyens de fixation 40 selon l'invention permettent de réduire encore le temps total nécessaire au changement d'un moule sur un dispositif de moulage 10.

Toutefois, lorsque l'on procède tel que cela vient d'être décrit, le dispositif de moulage 10 est en position ouverte et les coquilles 20 sont montées ou démontées successivement l'une après l'autre afin de permettre à un opérateur d'extraire ou d'introduire chacune d'elle dans le porte-coquille 22.

On décrira maintenant un deuxième procédé de changement de moule dans lequel l'actionnement des moyens de fixation par le dispositif de commande est mis en oeuvre alors que les porte-moules 14 du dispositif de moulage 10 sont en position fermée et grâce auquel le temps de changement d'un moule est encore réduit de manière substantielle.

De préférence, le moule 12 est donc constitué de deux demi-moules réalisés en deux parties, à savoir pour chacun d'une coquille 20 et d'un porte-coquille 22 comme cela a été indiqué précédemment.

Selon une caractéristique particulièrement avantageuse de l'invention, les moyens de fixation 40 sont également susceptibles d'être commandés lorsque les porte-moules 14 sont en position fermée.

Ainsi, les moyens de fixation 40 selon l'invention sont donc susceptibles d'être commandés lorsque les porte-moules 14 sont en position ouverte et lorsque les porte-moules 14 sont en position fermée.

La partie de commande 46 de l'organe d'actionnement 42 est apte à être commandée en déplacement depuis l'extérieur du dispositif de moulage 10 quelle que soit la position ouverte ou fermée des porte-moules 14 du dispositif de moulage 10.

De préférence et de manière non limitative, la partie de commande 46 de chaque organe d'actionnement s'étend en saillie hors du dispositif de moulage 10 de sorte qu'il est possible d'agir sur la partie de commande 46 indépendamment de la position ouverte ou fermée et tout particulièrement par comparaison, avec les solutions connues de l'état de la technique y compris en position fermée.

Bien que les différentes étapes en relation avec les moyens de fixation selon l'invention soient susceptibles d'être mises en oeuvre manuellement par au moins un opérateur, les étapes sont de préférence ainsi automatisées au moyen d'actionneurs appropriés et l'intervention de l'opérateur à tout le moins limitée voir supprimée.

En particulier, une automatisation de la commande du système de verrouillage pour réaliser le déverrouillage du loquet et/ou encore l'actionnement de l'organe 42 permet avantageusement de réduire encore le temps nécessaire pour procéder à un changement de moule 12.

Dans ce procédé de changement de moule 12, on procède aux étapes décrites ci-après alors que les porte-moules 14 du dispositif de moulage 10 sont en position fermée.

De préférence, le dispositif de moulage 10 est préalablement amené dans une zone déterminée de la machine de fabrication en vue du changement de moule.

Dans une machine rotative, une telle zone est par exemple située à l'opposé du côté de la machine dans laquelle on procède à l'introduction des préformes et à l'extraction des récipients fabriqués.

Selon le procédé de changement de moule de l'invention, on procède tout d'abord à une étape (a) consistant à commander les moyens de fixation 40 pour libérer chaque demi-moule alors que les porte-moules 14 occupent la position fermée.

Avec des moyens de fixation 40 réalisés selon le premier mode de réalisation, l'étape (a) comporte notamment les sous-étapes décrites ci-après.

Selon une première sous-étape (a1), on commande le déverrouillage des systèmes de verrouillage 62 afin de libérer chacun des organes d'actionnement 42 des moyens de fixation 40.

La première sous-étape (a1) est mise en oeuvre pour chacune des coquilles 20, avantageusement de manière simultanée.

Pour chaque coquille 20, on utilise des premiers moyens d'actionnement (non représentés) tels qu'un actionneur piloté apte actionner au moins un système de verrouillage 62.

Avantageusement, chaque actionneur est apte à actionner simultanément les deux systèmes de verrouillage d'une coquille 20.

En variante, le système de verrouillage 62 est actionné manuellement par un opérateur qui exerce l'effort de déverrouillage et procède successivement aux sous-étapes pour une coquille 20 puis l'autre coquille 20.

Ainsi, on commande l'actionneur pour que, dans chacun des systèmes 62, le loquet de verrouillage 72 se désengage du premier cran 64 de l'organe d'actionnement 42 et cela afin que l'organe d'actionnement 42 puisse être déplacé en coulissement de sa position de fixation vers sa position de libération.

Comme représenté à la figure 8, l'actionneur piloté est apte à exercer un effort de déverrouillage F, transversalement de l'extérieur vers l'intérieur, sur la partie 86 de chacune des palettes de commande 82 suivant une course déterminée par la venue en butée contre le support 68 de chaque système de verrouillage 62.

Ce faisant, l'actionneur provoque le déverrouillage souhaité dans chaque système de verrouillage 62 associé à l'organe d'actionnement 42, c'est-à-dire le pivotement du loquet de verrouillage 72 autour de son axe jusqu'à la position déverrouillée et cela à l'encontre de l'organe de rappel élastique 80 du loquet 72 vers la position verrouillée.

En effet, chaque loquet 72, entraîné par la partie 84 de la palette dont il est solidaire, pivote vers la position déverrouillée dans laquelle l'encoche 74 du loquet 72 est libre, aucun des crans 64 ou 66 n'y étant plus engagé.

On observera que les parties 86 de chacune des palettes de commande 82 de chaque système de verrouillage associé respectivement à l'un et l'autre des organes d'actionnement 42 sont adjacentes et suffisamment proches l'une de l'autre pour que l'actionneur puisse les solliciter simultanément l'une et l'autre afin de provoquer le déverrouillage de chaque loquet de verrouillage 72 des deux systèmes 62 que comporte une coquille 20.

Comme expliqué précédemment, le système de verrouillage 62 selon l'exemple de réalisation des figures 7 à 9 n'est pas un système bistable, c'est-à-dire que la position déverrouillée n'est pas une position stable de sorte que l'opérateur doit, avec une main, maintenir son effort sur les palettes de commande 82 au moins jusqu'à l'actionnement de l'organe 42 par dispositif de commande 48 (faute de quoi les loquets 72 seront automatiquement rappelés vers sa position verrouillée par les ressorts 80).

En effet, une fois opéré le déverrouillage du système de verrouillage 62 suivant la sous-étape (a1), l'organe d'actionnement 42 est alors libre d'être actionné par le dispositif de commande 48 afin de provoquer son coulissement, à l'encontre du ressort 52, de la position de fixation vers la position de libération.

Bien entendu, la sous-étape (a1) est uniquement mise en oeuvre si le dispositif de moulage 10 comporte un tel système de verrouillage 62 qui, bien qu'il puisse être supprimé, présente différents avantages décrits précédemment.

Selon une deuxième sous-étape (a2), chaque organe d'actionnement 42 étant déverrouillée, on commande le dispositif de commande 48 pour déplacer en coulissement les moyens de fixation 40 de la position de fixation à la position de libération.

Tel qu'illustré à la figure 6, la mise en oeuvre de la deuxième sous-étape (a2) est bien entendu fonction du dispositif de commande 48 utilisé.

Avantageusement, le dispositif de commande 48 est également un actionneur apte à solliciter sélectivement la partie de commande 46 de chacun des deux organes d'actionnement 42 associés à la coquille 20 afin d'exercer à l'encontre du ressort 52 de chacun un effort de libération qui est propre à faire coulisser chaque organe 42 vers la position de libération.

En variante, le dispositif de commande 48 est un dispositif de type mécanique, tel que celui des figures 10 à 15 ou encore des figures 19 et 20, qui est apte à être actionné manuellement par un opérateur, en agissant par exemple sur un levier.

Lorsque la position de libération est atteinte (figure 6), on commande selon une troisième sous-étape (a3) le verrouillage de l'organe d'actionnement 42 en position de libération.

Bien entendu une telle sous-étape (a3) n'est mise en oeuvre qu'en présence d'un système de verrouillage 62.

Le dispositif de commande 48 est apte à maintenir en position de libération chaque organe d'actionnement 42 au moins jusqu'au verrouillage selon la sous-étape (a3).

Pour obtenir le verrouillage, l'actionneur cesse d'exercer son effort sur les palettes de commande 82.

La cessation d'application de l'effort sur les palettes de commande 82 a pour effet que chaque loquet de verrouillage 72 de chaque système 62 est automatiquement rappelé vers sa position verrouillée et s'engage, du fait du coulissement de l'organe de commande 42 vers la position de libération, dans le deuxième cran 66 qui se trouve en vis-à-vis et comme cela est représenté à la figure 9.

Le loquet de verrouillage 72 étant en appui contre la face inférieure d'appui 66i, l'organe d'actionnement 42 qui est en position de libération se trouve alors bloqué par le loquet de verrouillage 72 (position verrouillée).

Avantageusement, le rappel automatique du loquet 72 vers la position verrouillée facilite cette manoeuvre car le verrouillage est obtenu par simple relâchement de la palette 82 et sans qu'aucun effort supplémentaire ne soit nécessaire.

Avantageusement, on procède selon une quatrième sous-étape (a4) à la commande des moyens de décollement de la coquille 20 par rapport au porte-coquille 22.

Avantageusement, la quatrième sous-étape (a4) est réalisée simultanément à la mise en oeuvre de la sous-étape (a2) par l'actionneur qui est commandé de manière à solliciter chaque organe d'actionnement 42 avec un effort de libération propre à faire parcourir à chacun d'eux la surcourse au delà de la position de libération afin de provoquer simultanément le décollement.

Après l'étape (a), les coquilles 20 présentes à l'intérieur du dispositif de moulage 10 ne sont plus fixées aux porte-coquilles 22 pas plus que, le cas échéant, le fond de moule 34 à la sellette de sorte que les coquilles 20 jointes enserrant entre elles le fond de moule 34 constituent avantageusement un sous-ensemble unitaire.

Toutefois, les coquilles 20 sont alors maintenues jointes uniquement par les porte-moules 14 qui entourent en position fermée ledit sous-ensemble unitaire.

C'est la raison pour laquelle, le moule 12 comporte avantageusement au moins une partie 120 qui fait saillie hors du dispositif de moulage 10.

Avantageusement, les coquilles 20 du moule 12 comportent une partie sommitale saillante 120 qui s'étend verticalement au dessus de la rainure 32 dans laquelle est reçu le bord 38 du porte-coquille 22.

A titre d'exemple non limitatif, le moule 12 représenté aux figures 2 et 3 comporte avantageusement une telle partie sommitale saillante 120 apte à permettre la préhension comme l'immobilisation des pièces du sous-ensemble unitaire.

La partie sommitale saillante 120 des coquilles 20 est destinée à permettre la mise en place de moyens d'assemblage, aptes ou non à assurer une fonction de support, pour joindre ensemble les demi-moules et former ledit sous-ensemble unitaire transportable qui est constitué par les coquilles 20 emprisonnant le fond de moule 34.

Grâce à la partie sommitale, il est notamment possible de joindre les coquilles 20 ensemble depuis l'extérieur du dispositif de moulage 10 alors que les porte-moules 14 sont en position fermée.

Ainsi, selon la deuxième étape (b) du procédé selon l'invention consiste à joindre ensemble les demi-moules par des moyens d'assemblage de manière à former un sous-ensemble unitaire transportable alors que les porte-moules occupent la position fermée.

En effet, chaque coquille 20 étant libre par rapport au porte-coquille 22 depuis la mise en oeuvre de l'étape (a), il existe un risque de chute de ces dernières lors de l'ouverture des porte-moules 14.

Selon un exemple de réalisation particulièrement simple et économique, les moyens d'assemblage sont constitués par un lien qui est disposé par l'opérateur au niveau de la partie sommitale 120 du moule 12 qui fait saillie hors du porte-coquille 14 de manière à immobiliser les coquilles 20 dans ladite position jointe et constituer le sous-ensemble unitaire.

Les moyens d'assemblage sont destinés à retenir ensemble les demi-moules afin de constituer ledit sous-ensemble unitaire transportable formant un bloc compact apte à être déplacé.

Lorsque le moule 12 comporte un fond de moule 34, celui-ci est maintenu automatiquement en place par coopération de formes avec les coquilles 20 qui, l'entourant, l'enserrent circonférentiellement.

De nombreux dispositifs pour maintenir et/ou supporter le sous-ensemble unitaire sont envisageables, notamment des dispositifs de type mécanique.

En variante, le moule 12 comporte un dispositif de blocage temporaire apte à maintenir accolées les coquilles pour constituer le sous-ensemble unitaire. Avantageusement, le dispositif de blocage comporte des moyens de blocage qui sont montés mobiles entre une position escamotée et une position de blocage.

De plus, les moyens de blocage sont avantageusement commandés en déplacement entre lesdites positions par un élément de commande, par exemple un élément lié à l'organe d'actionnement 42 des moyens de fixation 40 de manière à mettre à profit le coulissement dudit organe 42 vers sa position de libération pour procéder immédiatement après à l'immobilisation des coquilles 20.

Le blocage des coquilles 20 est par exemple réalisé en utilisant les pions 54 présents sur chacune des coquilles 20.

Selon une autre variante, des moyens de préhension tels qu'une pince sont mis en place autour de la partie sommitale 120 et sont aptes à assurer tant la fonction d'assemblage des coquilles ensemble pour former ledit sous-ensemble unitaire que la fonction de support d'un tel sous-ensemble unitaire, lesdits moyens de préhension étant actionnés par l'opérateur ou automatisés et reliés à une structure porteuse.

Avantageusement, l'étape (b) est susceptible d'être mise en oeuvre indifféremment avant ou après l'étape (a).

Quels que soient les moyens d'assemblage choisis, ils assurent de préférence également la fonction de support de manière à faciliter le transport du sous-ensemble unitaire.

La troisième étape (c) consiste à ouvrir les porte-moules depuis la position fermée jusqu'à la position ouverte pour en extraire, suivant un mouvement de translation, ledit sous-ensemble unitaire et de manière que ledit sous-ensemble unitaire demeure dans une position de référence, on procède à l'ouverture des porte-moules 14.

De préférence, lors de l'ouverture des porte-moules depuis la position fermée jusqu'à la position ouverte, le sous-ensemble unitaire précédemment constitué est extrait "automatiquement" et demeure statique, seuls les porte-moules 14 se déplaçant pour s'écarter transversalement l'un de l'autre.

Lorsque que des moyens d'assemblage seuls (sans fonction de support) sont mis en place à l'étape (b), le sous-ensemble unitaire est supporté par l'intermédiaire de son fond 34 en position de référence, notamment par l'intermédiaire d'une sellette.

Avantageusement, les moyens d'assemblage sont constitués par les moyens de préhension (non représentés) précités, à savoir une pince dont les mors sont aptes à serrer la partie sommitale 120 du sous-ensemble unitaire, laquelle pince assure alors également la fonction de support du sous-ensemble unitaire transportable.

Grâce à la coopération des moyens de préhension associés à la partie sommitale 120, il est dès lors possible de procéder à l'ouverture des porte-moules 14 du dispositif de moulage 10 sans risque de chute du sous-ensemble unitaire.

La quatrième étape (d) consiste à enlever le sous-ensemble unitaire d'entre les porte-moules à partir de sa position de référence.

De préférence, on s'assure préalablement à l'extraction du déverrouillage du fond de moule 34 par rapport à la sellette de support et au débranchement des raccords fluidiques.

Comme indiqué précédemment, le sous-ensemble unitaire est avantageusement intégralement supporté par les moyens de préhension auxquels le sous-ensemble est suspendu.

Bien entendu, les moyens de préhension sont également susceptibles d'être formés directement par les mains d'un opérateur se saisissant du sous-ensemble unitaire, constitués grâce à des moyens d'assemblage, pour l'extraire depuis la position de référence, ici centrale.

En variante, l'extraction du sous-ensemble unitaire est automatisée et réalisée au moyen d'un robot comportant au moins un bras muni de moyens de préhension.

La phase de démontage du moule 12 selon le procédé est alors achevée, le dispositif de moulage est en position ouverte en attente du montage d'un autre sous-ensemble unitaire.

Une phase de montage d'un sous-ensemble unitaire succède alors à la phase de démontage précitée. Pour ce faire, on procède à la mise en oeuvre des étapes suivantes.

Pour la phase de montage, une cinquième étape (e) consiste à mettre en place un sous-ensemble unitaire dans ladite position de référence entre les porte-moules en position ouverte.

Les porte-moules 14 étant en position ouverte, un sous-ensemble unitaire est introduit suivant la flèche en position de référence.

De préférence et selon l'exemple de réalisation du dispositif de moulage 10, on procède au montage du fond 34 sur la sellette et le cas échéant aux raccordements fluidiques requis.

Le sous-ensemble unitaire est alors supporté par la sellette et les coquilles 20 maintenues par les moyens d'assemblage ou de préhension.

Puis, selon une sixième étape (f), on referme les porte-moules sur le sous-ensemble unitaire.

Dès lors que les porte-moules 14 se referment sur le sous-ensemble unitaire précédemment disposé en position de référence, il est possible d'ôter les moyens d'assemblage.

La septième étape (g) consiste à enlever les moyens d'assemblage du sous-ensemble unitaire pour autoriser la séparation les demi-moules.

La huitième étape (h) consiste à commander les moyens de fixation pour fixer chaque demi-moule au porte-moule associé.

Avec des moyens de fixation 40 selon le premier mode de réalisation, la fixation est obtenue par la mise en oeuvre de sous-étape similaires à celles décrites précédemment pour l'étape (a) de la phase de démontage.

Selon une sous-étape (h1), on commande le déverrouillage du système de verrouillage 62.

Avantageusement, la fixation des coquilles 20 dans les porte-coquilles 22 est obtenue automatiquement du fait du rappel des organes d'actionnement 42 vers la position de fixation de sorte qu'aucune sous-étape spécifique n'est requise.

En l'absence de ressort de rappel de l'organe d'actionnement 42, on commande selon une sous-étape (h2) le dispositif de commande 48 pour déplacer l'organe d'actionnement de la position de libération vers la position de fixation, par exemple au moyen de l'actionneur formant le dispositif de commande 48.

Une fois la position de fixation atteinte (figure 5), on commande le système de verrouillage 62 pour verrouiller en position de fixation ledit organe d'actionnement 42 des moyens de fixation 40.

Comme le système de verrouillage 62 comporte un ressort de rappel du loquet 72 en position de verrouillage de la position de fixation des organes d'actionnement 42 des moyens de fixation 40, aucune sous-étape particulière n'est requise et le verrouillage est obtenu automatiquement.

En variante, en l'absence d'un tel moyen de rappel du loquet 72 vers la position verrouillée, on commande selon une sous-étape (h3) le système de verrouillage 62 pour procéder au verrouillage de l'organe d'actionnement par le loquet 72.

Avantageusement, on commande alors si nécessaire le verrou 18 pour verrouiller les porte-moules 14 en position de fermeture.

Avantageusement, le procédé de changement de moule selon l'invention permet de réduire de manière très importante le temps nécessaire au démontage et au montage par comparaison aux solutions connues de l'état de la technique.

En effet, le sous-ensemble unitaire formé des coquilles 20 et le cas échéant du fond de moule 34, est susceptible d'être monté ou démonté en une seule opération et non plus suivant des opérations successives de saisie puis dépose pour chacune des pièces.

Un tel procédé de changement de moule est rendu possible grâce aux moyens de fixation selon l'invention qui permettent de réaliser la libération comme la fixation du sous-ensemble unitaire de manière particulièrement simple et rapide.

Selon un mode opératoire particulièrement avantageux, l'intervention de l'opérateur est réduite voire supprimée et les moyens de support, tels qu'une pince commandée en ouverture et fermeture assurant avantageusement également la fonction de maintien du sous-ensemble unitaire, sont reliés à un dispositif de transport.

Avantageusement, un tel dispositif de transport est apte à transporter, après la phase de démontage, le sous-ensemble unitaire jusqu'à un magasin de stockage alors que d'autres moyens de support sont avantageusement en attente avec un nouveau sous-ensemble unitaire pour réaliser sans attendre son montage sur le dispositif de moulage 10 suivant les étapes correspondant à la phase de montage.

Bien entendu, dans le procédé qui vient d'être décrit, pour pouvoir procéder à l'ouverture comme à la fermeture du dispositif de moulage 10, on actionne préalablement ou simultanément le verrou 18 de fermeture des porte-moules 14 vers sa position déverrouillée ou verrouillée afin de pouvoir écarter les porte-moules 14 l'un de l'autre, le déverrouillage et l'ouverture étant notamment réalisés manuellement par l'opérateur.

A cet effet, après avoir exercé manuellement un effort sur la came de commande du verrou 18, l'opérateur exerce un effort transversal, toujours manuellement, pour écarter les porte-moules 14 et provoquer l'ouverture jusqu'à atteindre ladite position ouverte.

De préférence, le verrou 18 comporte des moyens de rappel apte à rappeler automatiquement le verrou vers sa position de verrouillage des porte-moules en position fermée.

Avantageusement, le deuxième procédé de changement de moule permet donc de réduire encore le temps nécessaire au démontage par comparaison au premier procédé, de surcroît par comparaison par rapport aux solutions connues de l'état de la technique.

En effet, dans le deuxième procédé, le sous-ensemble unitaire formé des coquilles 20 et le cas échéant du fond de moule 34 est susceptible d'être monté ou démonté en une seule opération et non plus suivant des opérations successives pour chaque coquille 20 notamment.

Un tel procédé de changement de moule est rendu possible grâce aux moyens de fixation selon l'invention grâce auxquels la libération du sous-ensemble unitaire est obtenue de manière particulièrement simple et rapide.

Selon un mode opératoire particulièrement avantageux, l'intervention de l'opérateur est réduite voire supprimée et les moyens de préhension du sous-ensemble unitaire, tels qu'une pince commandée en ouverture et fermeture, sont reliés à un dispositif de transport apte à transporter, après la phase de démontage, un tel sous-ensemble unitaire notamment jusqu'à un magasin de stockage alors que d'autres moyens de préhension sont avantageusement en attente avec le nouveau sous-ensemble unitaire de moulage pour réaliser sans attendre son montage sur le dispositif de moulage 10 suivant les étapes correspondant à la phase de montage.

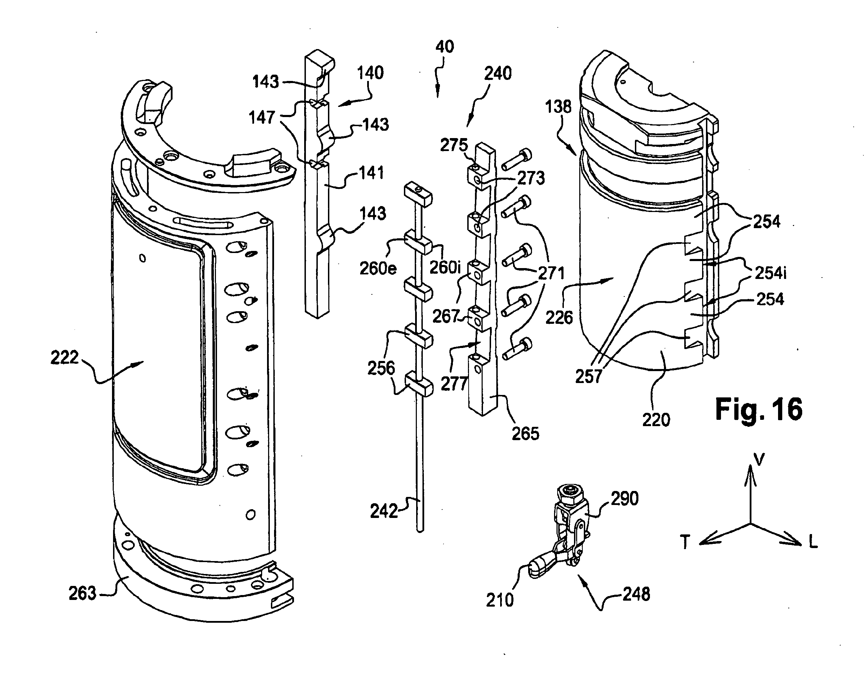

On décrira maintenant un deuxième mode de réalisation de moyens de fixation pour un dispositif de moulage selon l'invention tels que représentés aux figures 16 à 20.

La description du deuxième mode de réalisation des moyens de fixation sera avantageusement effectuée par comparaison avec le premier mode de réalisation.

De plus, les éléments présentant des fonctions similaires, analogues ou identiques seront désignés, à l'exception toutefois des premiers moyens de fixation, par les mêmes numéros de référence après incrémentation de deux centaines, par exemple la référence 220 correspond à la référence 20 et désigne les coquilles.

On a représenté à la figure 16 uniquement un demi-moule d'un moule 212. De préférence, chaque demi-moule est réalisé comme précédemment en deux parties distinctes, à savoir une coquille 220 comportant une demi-empreinte (non représentée) qui est destinée à être fixée de manière démontable à un porte-coquille 222 grâce à des moyens de fixation 40.

L'autre demi-moule non représenté est en tout point identique à celui de la figure 16 et chaque demi-moule est apte à être monté sur un porte-moule 14 d'un dispositif de moulage 10 pour une machine de fabrication de récipients, tel que le dispositif de moulage 10 représenté aux figures 1 et 2.

Les moyens de fixation 40 sont destinés à équiper un dispositif de moulage 10 du type décrit précédemment et comportant :
- deux porte-moules 14 montés mobiles l'un par rapport à l'autre entre une position ouverte et une position fermée,
- deux demi-moules 220 qui, chacun pourvu d'une demi-empreinte et porté par un porte-moule 14, sont respectivement montés dans le porte-moule 14 associé, et
- des moyens de fixation 40 aptes à fixer de manière démontable au porte-moule 14 chaque demi-moule 220 occupant une position montée.

Plus précisément, les moyens de fixation 40 comportent des premiers moyens de fixation 140 et des deuxièmes moyens de fixation 240.

Les premiers moyens de fixation 140 sont agencés entre les bords arrière de la coquille 220 et du porte coquille 222, c'est-à-dire les bords situés du côté de l'axe O de rotation des porte-moules 14 tandis que les deuxièmes moyens de fixation 240 sont agencés entre les bords avant de la coquille 220 et du porte coquille 222, diamétralement à l'opposé des premiers moyens de fixation 140.

Les premiers moyens de fixation 140 sont analogues à ceux décrits pour le côté adjacent à l'axe de rotation dans le document de l'état de la technique EP-B1-0.821.641 précité auquel on se reportera pour de plus amples détails.

Selon ce document, les organes de fixation disposés de ce côté arrière n'ont pas à être actionnés mais constituent de préférence de simples butées réglables.

Avantageusement, le positionnement mutuel selon la direction verticale du porte-coquille 222 et de la coquille 220 est obtenu par coopération de formes d'un ensemble d'éléments du type nervure(s)/gorge(s) emboîtés l'un dans l'autre et dont une partie est, sur la figure 1, visible sur la face externe 226 de la coquille 220.

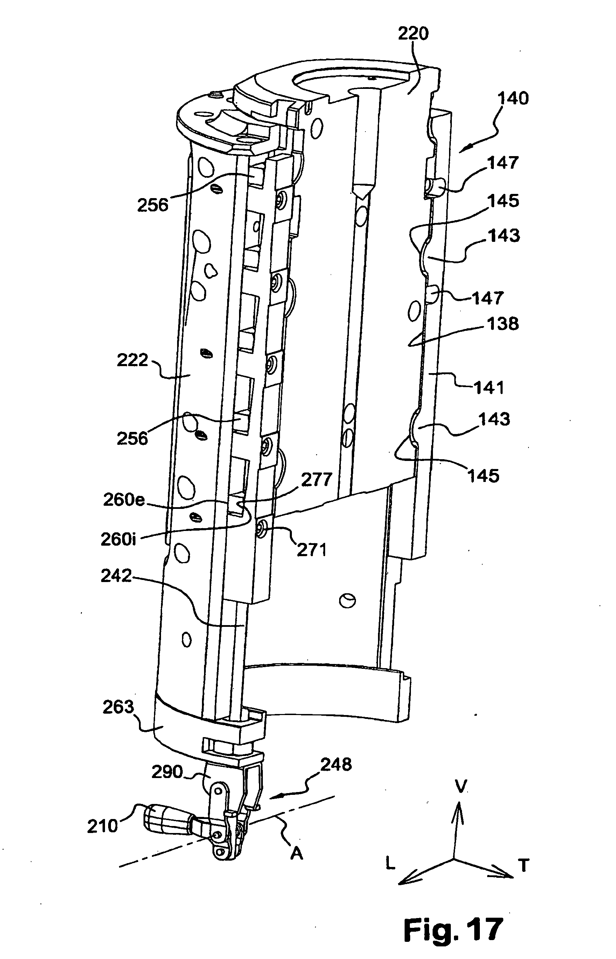

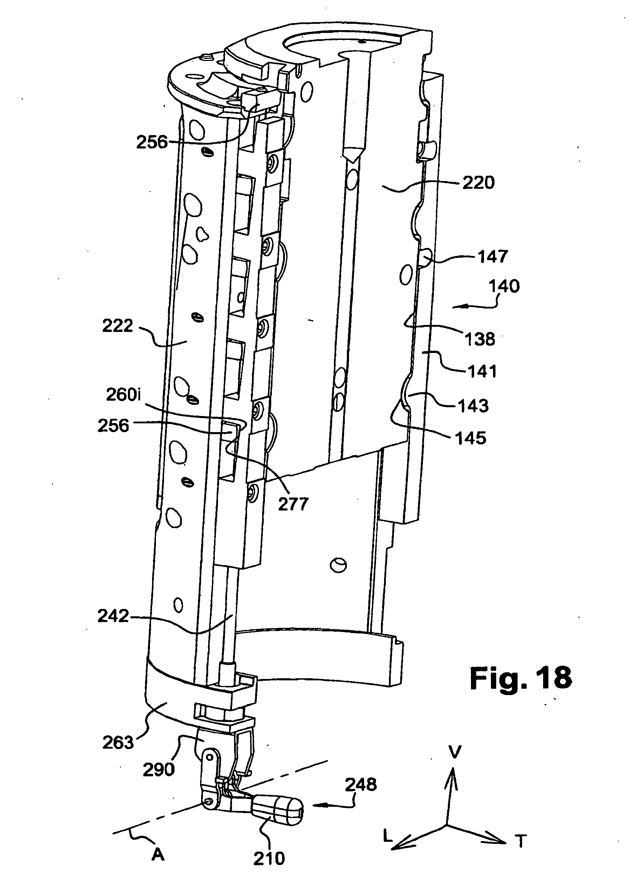

De préférence et comme illustré sur les figures 17 et 18, les premiers moyens de fixation 140 comportent principalement une barre 141 d'orientation verticale qui comporte des parties protubérantes 143 s'étendant transversalement et destinées à être reçues dans des logements 145 de formes complémentaires que comporte le bord arrière 138 de la coquille 220.

De préférence, la barre 141 comporte des logements 147 pour le passage d'organes de fixation (non représentés) de la barre 141 sur le porte-coquille 222.

Avec de tels premiers moyens de fixation 140, la coquille 220 est introduite dans le porte-coquille 222 en la faisant glisser avec rotation.

On décrira maintenant plus particulièrement les deuxièmes moyens de fixation 240 illustrant le deuxième mode de réalisation de moyens de fixation 40 selon l'invention.

Conformément à l'invention, les deuxièmes moyens de fixation 240 de chaque coquille 220 au porte-coquille 222 sont montés mobiles entre au moins une position de fixation et une position de libération de la coquille 220 et sont aptes à être commandés en déplacement entre lesdites positions lorsque les porte-moules 14 sont en position fermée.

Les deuxièmes moyens de fixation 240 comportent au moins un organe d'actionnement 242 apte à être commandé en déplacement depuis l'extérieur du dispositif de moulage 10 quelle que soit la position ouverte ou fermée des porte-moules 14 du dispositif de moulage 10.

De préférence, l'organe d'actionnement 242 est constitué par une tige filetée qui s'étend verticalement.

Avantageusement, l'organe d'actionnement 242 des deuxièmes moyens de fixation 240 est destiné à être commandé sélectivement par un dispositif de commande 248 apte à commander sélectivement le coulissement vertical dudit organe 242 entre les positions de fixation et de libération de chaque coquille 220.

Avantageusement, les deuxièmes moyens de fixation 240 comportent respectivement au moins un premier élément 254 de fixation qui est lié de chaque coquille 220 et au moins un second élément 256 de fixation qui, complémentaire du premier élément 254, est lié à l'organe d'actionnement 242.

De préférence, les premiers éléments 254 sont constitués par des plots solidaires de la face externe 226 de la coquille 220, chaque plot 254 saillant comportant une face interne d'appui 254i qui, plane, s'étend verticalement selon la direction longitudinale.

De préférence, les plots 254 sont réalisés par usinage de la coquille 220, en variante venus de matière par moulage, plus précisément ici d'une coquille 220 réalisée selon l'état de la technique.

En effet, comme on peut le voir sur la figure 1, la coquille 220 comporte à l'avant un bord identique au bord arrière 138 mais qui pourrait être supprimé dès lors qu'il n'a plus de raison d'être en présence des deuxièmes moyens de fixation 240.

Entre deux plots 254 consécutifs, la coquille 220 présente une encoche 257 destinée à autoriser le passage des seconds éléments 256 lorsqu'ils occupent la position de libération.

De préférence, les seconds éléments 256 liés à l'organe d'actionnement 242 sont constitués par des coins.

Avantageusement, les coins 256 sont portés par l'organe d'actionnement 242 de sorte que les coins 256 sont solidaires en déplacement, ici sans jeu comme le crochet supérieur 56, dudit organe 242 lorsque ce dernier coulisse verticalement entre les positions de fixation et de libération.

De préférence, chaque coin 256 comporte un trou taraudé afin de permettre son montage par vissage sur la tige filetée formant l'organe d'actionnement 242.

Les coins 256 sont par exemple de forme globalement parallélépipédique. Chaque coin 256 comporte en particulier une face verticale externe 260e d'orientation longitudinale, dite face de retenue, et, à l'opposé transversalement, une face verticale interne 260i, dite face de serrage.

Avantageusement, la face verticale externe 260e est plane tandis que la face verticale interne 260i est convexe, présentant un profil bombé.

Les deuxièmes moyens de fixation 240 comportent un support 265 en forme de râteau qui présente une partie principale d'orientation verticale à partir de la face externe duquel s'étendent des parties transversales 267.

De préférence, le support 265 est fixé solidairement au porte-coquille 222 par l'intermédiaire d'organe de fixation 271, tels que des vis, qui traversent le support 265 ici au niveau de trous 273 d'orientation transversale qui débouchent à l'extrémité libre des parties 267.

Les parties transversales 267 du support 265 comportent chacune un autre trou 275 d'orientation verticale qui, décalé longitudinalement par rapport au trou 273, est traversé par l'organe d'actionnement 242.

L'organe d'actionnement 242 est toutefois d'un diamètre inférieur afin de pouvoir coulisser librement, selon la direction verticale, par rapport au support 265 selon une course correspondant au moins au déplacement entre les positions de fixation et de libération.

Les parties 267 du support 265 délimitent entre elles un logement en "U" dans chacun desquels, en position montée puis fixée, est reçu un coin 256. Chaque logement présente une face verticale oblique 277 disposée transversalement en vis-à-vis de la face convexe de serrage 260i de chaque coin 256.

La face oblique 277 forme une rampe destinée à coopérer avec la face de serrage 260i et présente une pente telle que le logement pour le coin 256 qu'elle délimite transversalement avec le porte-coquille 222 se rétrécit verticalement lorsque le coin 256 coulisse de haut en bas suivant la direction verticale.

Tel qu'illustré par la figure 17, en position de fixation des deuxièmes moyens de fixation 240, chaque coin 256 formant le second élément coopère, d'une part, par l'intermédiaire de sa face de retenue 260e avec la face d'appui 254i des plots 254 portés par la coquille 220 et, d'autre part, par sa face de serrage 260i avec la face oblique 277 du support 265.

Grâce à quoi, la coopération entre les faces de retenue 260e et d'appui 254i garantit la fixation de la coquille 220 au porte-coquille 222 avec application d'un effort de serrage qui, résultant de la coopération entre les faces de serrage 260i du coin et oblique 277 du support 265, est propre à plaquer la face externe 226 de la coquille contre la face interne (non visible) du porte-coquille 222.

Tel qu'illustré par la figure 18 représentant la position de libération des deuxièmes moyens de fixation 240, les coins 256 sont décalés verticalement vers le haut de manière que les faces de retenue 260e des coins 256 soient positionnés transversalement en coïncidence avec les encoches 257 et ne coopèrent ainsi plus avec les faces d'appui 254i associés des plots 254.

Avantageusement, le dispositif de commande 248 est apte à solliciter l'organe d'actionnement 242 pour provoquer sélectivement le déplacement de l'organe d'actionnement 242 des deuxièmes moyens de fixation 240 entre les positions de fixation et de libération.

De préférence, le dispositif de commande 248 est constitué par une sauterelle à tige coulissante, un tel dispositif bien connu est encore appelé *"toggle clamp"* en anglais.

Un tel dispositif 248 est apte à transformer un mouvement de rotation en un mouvement de translation, ici un coulissement vertical.

Avantageusement, le dispositif de commande 248 comporte une équerre de fixation 290 grâce à laquelle il est monté à demeure sur la platine 263 du porte-coquille 222 et cela sur chaque porte-coquille 222 du dispositif de commande 248.

Le dispositif de commande 248 comporte un levier 210, ici muni d'une poignée, qui est monté mobile en rotation entre au moins une première position et une deuxième position autour d'un axe A porté par l'équerre 290.

La première position du dispositif de commande 248 illustrée à la figure 17 correspond à la position de fixation des deuxièmes moyens de fixation 240 tandis que la deuxième position illustrée à la figure 18 correspond à la position de libération desdits moyens 240.

Le levier 210 du dispositif 248 est relié à l'extrémité inférieure d'une tige 206 formant un moyen d'actionnement dont l'autre extrémité supérieure est avantageusement liée en déplacement à l'extrémité inférieure de l'organe d'actionnement 242 des deuxièmes moyens de fixation 240.

Comme on peut le voir par comparaison des figures 19 et 20, lorsque le levier 210 est déplacé, suivant une rotation de 180° indiquée schématiquement par une flèche F1, depuis sa première position (figure 19) correspondant à la position de fixation jusqu'à sa deuxième position (figure 20) correspondant à position de libération, la tige 206 se déplace alors verticalement de bas en haut suivant la flèche F2 représentée sur la figure 20.

En effet, dans la première position, l'extrémité inférieure de la tige 206 reliée au levier 210 s'étend verticalement en dessous de l'axe a tandis que dans la deuxième position, cette même extrémité s'étend au dessus de l'axe A de rotation.

Par comparaison au premier mode, les moyens de fixation 240 selon le deuxième mode de réalisation ne comportent pas de système de verrouillage et l'organe d'actionnement 242 n'est pas rappelé automatiquement vers la position de fixation par un moyen de rappel élastique.

De plus, en raison de la présence des premiers moyens de fixation 140 et par comparaison au premier mode de réalisation, l'introduction de la coquille 220 dans le porte-coquille 222 ne s'effectue pas suivant un mouvement de translation accompli globalement selon la direction transversale.

En conséquence, des procédés de changement de moule décrits précédemment en référence au premier mode de réalisation des moyens de fixation 40, seul le premier procédé de changement de moule est susceptible d'être mis en oeuvre, c'est-à-dire le procédé débutant par l'ouverture du dispositif de moulage 10 et dans lequel les coquilles sont démontées successivement l'une après l'autre.

Toutefois, tel ne serait pas le cas si les deux bords arrière et avant de la coquille 220 et du porte-coquille 222 étaient pourvus de deuxièmes moyens de fixation 240 car la commande des moyens de fixation pourrait être obtenue alors que les porte-moules 14 sont en position fermée et en libérant totalement chaque coquille 220 qui ne serait plus fixée au porte-coquille 222.

On décrira maintenant le fonctionnement des moyens de fixation 240 selon le deuxième mode de réalisation au cours de la mise en oeuvre des étapes de montage et démontage pour procéder à un changement de moule suivant un procédé globalement similaire au premier procédé décrit précédemment.

Pour la phase de démontage selon le procédé, la première étape (a) consiste à commander l'ouverture du dispositif de moulage 10, c'est-à-dire à faire pivoter les porte-moules 14 autour de l'axe O depuis la position fermée jusqu'à la position ouverte.

Comme indiqué précédemment, un dispositif de commande 48 formé par une sauterelle est monté à demeure sur chaque porte-coquille 220 du dispositif de moulage 10 de sorte que, par comparaison avec le premier procédé, aucune étape d'accrochage ou de mise en place d'un tel dispositif n'est requise.

De même, en l'absence de système de verrouillage, l'étape de commande du déverrouillage du système ne trouve pas application dans l'exemple de réalisation des moyens de fixation selon le deuxième mode de réalisation.

Selon une deuxième étape (b), on déplace les moyens de fixation 240 de la position de fixation vers la position de libération par l'intermédiaire du dispositif de commande 248.

Pour ce faire, l'opérateur actionne manuellement le levier 210 afin de le faire pivoter de 108° autour de l'axe A de rotation de sa première position jusqu'à sa deuxième position.

Lors de la course du levier 210 vers la deuxième position, la tige 206 va coulisser verticalement vers le haut et solliciter l'organe d'actionnement 242 de manière à faire coulisser ledit organe 242 de sa position de fixation vers sa position de libération.

En l'absence de ressort de rappel de l'organe d'actionnement 242, la position de libération des deuxièmes moyens de fixation 240 est une position stable de sorte que, par comparaison avec le premier procédé, aucun verrouillage de l'organe d'actionnement n'est nécessaire.

Par comparaison avec le premier mode de réalisation, on remarquera que les deuxièmes moyens de fixation 240 ne comportent pas non plus de moyens de décollement.

Les différentes étapes relatives à la phase de démontage selon le procédé de changement de moule qui vient d'être décrit sont avantageusement réalisées par un unique opérateur qui, lorsque les deuxièmes moyens de fixation 240 occupent la position de libération, est libre de pouvoir démonter la coquille.

Selon une troisième étape (c), la coquille 220 est démontée par l'opérateur.

Pour procéder à son extraction, l'opérateur se saisit de la coquille 220 et lui fait accomplir un mouvement de rotation circulaire par rapport au porte-coquille 222, le mouvement de rotation s'opérant de l'arrière vers l'avant de manière à sortir d'abord le bord avant libéré des deuxièmes moyens de fixation 240, puis le bord arrière 138 que l'on désengage ainsi des premiers moyens de fixation 140.

Avantageusement, les étapes du procédé qui viennent d'être décrites sont de nouveau mises en oeuvre pour démonter ensuite l'autre coquille 220.

Bien entendu, outre le démontage de chacune des coquilles 220, l'opérateur procède également selon une étape préliminaire au démontage du fond de moule 34 lorsque le moule comporte un tel fond et cette étape est alors avantageusement mise en oeuvre dès l'ouverture des porte-moules 14.

Pour réaliser le montage d'une nouvelle coquille 220 dans chaque porte-coquille 222 alors que le dispositif de moulage 10 est en position ouverte, l'opérateur exécute les étapes ci-après qui correspondent aux étapes décrites précédemment exécutées dans l'ordre inverse.

Pour la phase de montage du procédé de changement, l'opérateur procède - selon une quatrième étape (d) - à l'introduction d'une coquille 220 réalisé suivant un mouvement circulaire de l'avant vers l'arrière de manière à engager d'abord le bord 138 dans les premiers moyens de fixation 140.

Selon une cinquième étape (e), on commande les deuxièmes moyens de fixation 240 pour les déplacer de la position de libération vers la position de fixation.

Dans le deuxième mode de réalisation, l'opérateur déplace le levier 210 du dispositif de commande 248 de sa deuxième position (figures 18 et 20) vers sa première position (figures 17 et 19) provoquant alors simultanément le coulissement vers le bas de la tige 206 et de l'organe d'actionnement 242 jusqu'à ce que les coins 256 atteignent la position de fixation.

En position de fixation, la face de retenue 260e de chaque coin 256 coopère avec la face d'appui 254i de chaque plot 254 en exerçant ainsi sur la coquille 220 un effort essentiellement transversal orienté de l'intérieur vers l'extérieur.

Dans le deuxième mode de réalisation, les faces 260e et 254i sont avantageusement planes pour optimiser la surface d'application de l'effort et l'effort de serrage est obtenu à la faveur de la coopération entre les faces convexes 260i des coins et 277 du support 265.

En variante, les plots 254 et les coins 256 sont conformés avec des faces complémentaires aptes à coopérer par coincement de manière à réaliser avec deux faces uniquement tant le blocage de la coquille 220 dans le porte-coquille 222 que le serrage propre à plaquer la face externe 226 de la coquille 220.

Avantageusement, dédoublés ou en combinaison avec des premiers moyens de fixation 140, les deuxièmes moyens de fixation 240 selon l'invention permettent de réduire encore les temps d'intervention d'au moins un opérateur pour procéder successivement au démontage et au montage des coquilles 220.

En effet, il résulte de la description qui vient d'en être faite que les deuxièmes moyens de fixation 240 sont commandés de manière particulièrement simple et rapide en agissant sur le levier 210 du dispositif de commande 248.

En conséquence, les deuxièmes moyens de fixation 240 selon l'invention permettent de réduire encore le temps total nécessaire au changement d'un moule sur un dispositif de moulage 10.

Ainsi qu'on l'aura compris, lorsque l'on procède tel que cela vient d'être décrit, le dispositif de moulage 10 est en position ouverte et les coquilles 220 sont montées ou démontées successivement l'une après l'autre afin de permettre à un opérateur d'extraire ou d'introduire chacune d'elle dans le porte-coquille 222.

Toutefois, la mise en oeuvre d'un procédé de changement de moule automatisé et encore plus rapide est également susceptible d'être obtenue en disposant des deuxièmes moyens de fixation 240 sur chacun des bords et non un seul.

Un tel procédé serait alors similaire au deuxième procédé décrit précédemment en relation avec le premier mode de réalisation et le dispositif de commande 248 avantageusement dédoublé avec un levier 210 commun pour commander simultanément la libération de chacun des deuxièmes moyens de fixation.

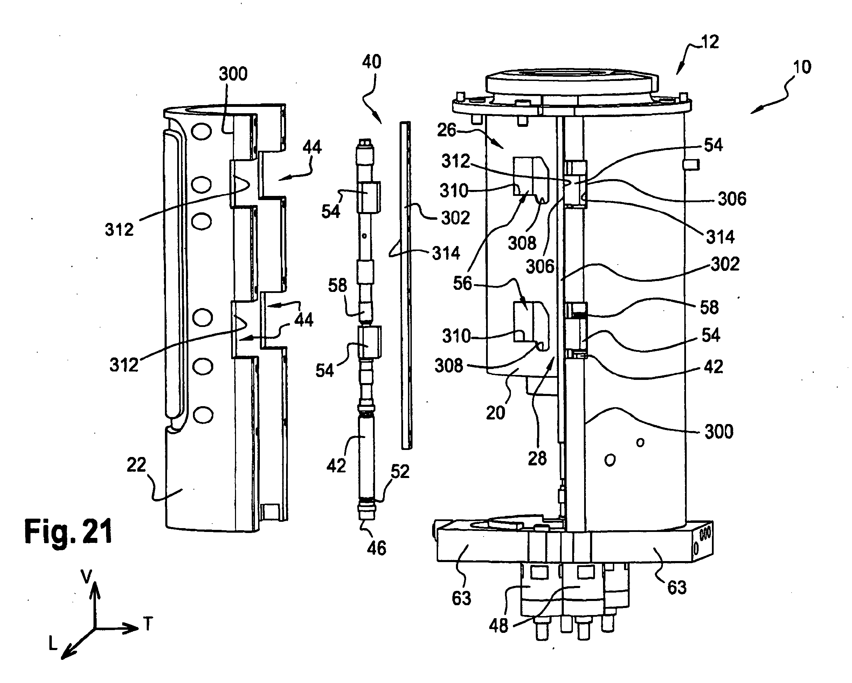

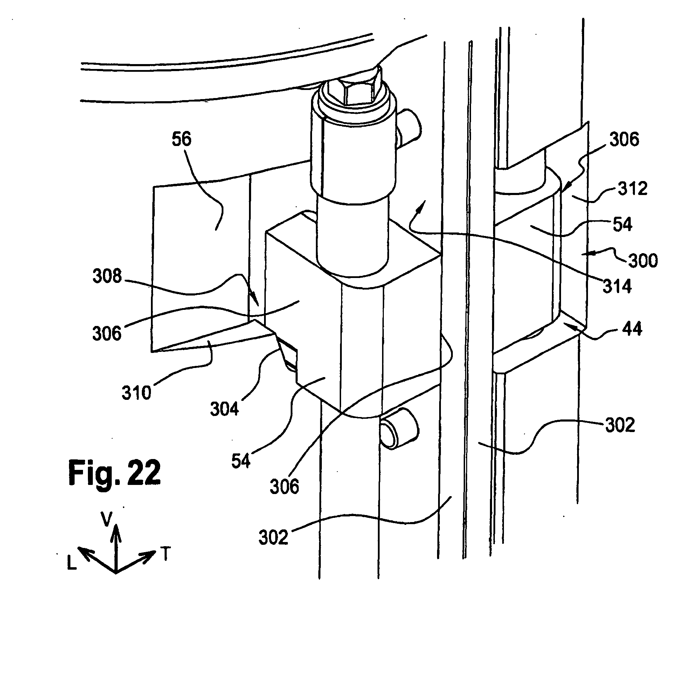

On décrira maintenant un troisième mode de réalisation de moyens de fixation pour un dispositif de moulage selon l'invention tels que représentés aux figures 21 et 22.

La description du troisième mode de réalisation des moyens de fixation sera avantageusement effectuée par comparaison avec le premier mode de réalisation.

Ainsi, les éléments présentant des fonctions similaires, analogues ou identiques seront désignés par les mêmes numéros de référence, à l'exception toutefois des moyens de fixation 40 dont les éléments sont désignés par des références commençant à partir de trois cents.

La figure 21 représente un dispositif de moulage 10 du type en "portefeuille" pour une machine de type "rotative" destinée à la fabrication de récipient en matière thermoplastique à partir de préforme préalablement chauffée.

Le dispositif de moulage 10 comporte donc deux porte-moules (non représentés) qui sont montés mobiles l'un par rapport à l'autre autour d'une axe O de rotation entre une position ouverte et une position fermée.

Le dispositif de moulage 10 comporte encore deux demi-moules qui sont réalisés, ici et comme précédemment, en deux parties distinctes à savoir une coquille 20 comportant la demi-empreinte du récipient à fabriquer et un porte-coquille 22 associé destiné à porter ladite coquille qui est fixée de manière démontable au porte-coquille 22 grâce aux moyens de fixation 40 selon l'invention.

Les moyens de fixation 40 sont montés mobiles entre au moins une position de fixation et une position de libération et comportent au moins un premier élément 54 de fixation et un deuxième élément 56 de fixation.

Dans ce troisième mode de réalisation, les moyens de fixation 40 comportent au moins un organe d'actionnement 42 des moyens de fixation qui est apte à être commandé depuis l'extérieur du dispositif de moulage 10 et cela quelle que soit la position ouverte ou fermée du dispositif.

Des moyens de fixation 40 selon le troisième mode sont agencés entre chacun des bords 300 du porte-coquille 22 et des bords 28 de la coquille 20.

Un organe d'actionnement 42 est donc porté par chacun des deux bords 300 de chaque porte-coquille 22 dans un logement 44 duquel l'organe d'actionnement 42 est monté coulissant, ici selon la direction verticale.

Le logement 44 est ouvert transversalement et fermé par un élément tel qu'une plaque 302 qui est rapportée à fixation sur le bord 300, par exemple par vissage, pour permettre notamment tant le montage que le maintien en place de l'organe d'actionnement 42.

L'organe d'actionnement 42 est apte à être commandé sélectivement en déplacement entre lesdites positions de fixation et de libération grâce à un dispositif de commande 48.

Avantageusement, chaque organe d'actionnement 42 dispose de son propre dispositif de commande 48 associé constitué ici d'un actionneur, de préférence un vérin pneumatique qui est monté en permanence sur un côté de la console 63.

Chaque actionneur 48 est apte à être piloté pour faire coulisser sélectivement l'organe d'actionnement 42 entre les positions de fixation et de libération.

De préférence, les actionneurs 48 sont commandés de manière synchrone pour au moins une coquille 20 afin de permettre la mise en oeuvre du premier procédé décrit précédemment dans lequel les coquilles 20 sont démontées successivement alors que le dispositif de moulage 10 est en position ouverte.

Avantageusement, les actionneurs 48 sont commandés successivement ou simultanément alors que le dispositif de moulage 10 est en position fermée et avant de procéder à l'ouverture afin de permettre l'extraction d'un sous-ensemble unitaire selon le deuxième procédé de changement de moule décrit précédemment.

De préférence, l'organe d'actionnement 42 des moyens de fixation 40 porte les premiers éléments 54 de fixation constitués par des éléments de type mâle tandis que les seconds éléments 56 de fixation, complémentaires des premiers éléments 54, sont portés par la coquille 20 (ou demi-moule).

Ainsi, ledit au moins un élément de fixation solidaire de chaque coquille 20 ou demi-moule est un second élément de fixation 56 de type femelle, tel qu'un cran ou une encoche, tandis que ledit au moins un autre élément de fixation lié à l'organe d'actionnement 42 est un premier élément de fixation 54 de type mâle, tel qu'un ergot.

Par comparaison avec le premier mode de réalisation, les éléments de type mâle/ femelle sont donc inversés et les seconds éléments 56 de fixation de type femelle avantageusement portés par la coquille 20.

Les seconds éléments 56 en creux sont par exemple réalisés sous forme d'au moins un cran ou d'au moins une encoche disposés sur le bord 28 de la coquille 20, notamment obtenus par usinage de la face cylindrique 26 de la coquille 20.

Ainsi dans ce troisième mode comme dans le deuxième mode de réalisation, les coquilles 20 ou demi-moules qui sont fréquemment manipulées lors des opérations de changement de moules sont, par comparaison au premier mode de réalisation, dépourvues de toutes parties saillantes naturellement plus exposées à notamment subir des chocs.

De préférence, lorsque l'élément femelle correspondant au premier élément de fixation 54 est associé à chaque coquille 20 (ou un demi-moule), il est encore possible de prévoir au moins deux types différents d'élément femelle.

Avantageusement, une même coquille peut comporter, au niveau de son bord 28 ou de la face cylindrique adjacente audit bord 28, deux types différents d'élément(s) femelle(s).

Le montage et le démontage d'un moule (formé de deux coquilles 20) est alors susceptible d'être effectué sur un dispositif de moulage 10 donné d'une machine équipé d'un premier type de moyens de fixation ou un autre dispositif de moulage donné, d'une autre machine rotative, équipé d'un deuxième type de moyens de fixation, chacun des moyens de fixation comportant respectivement des seconds éléments "mâles" de fixation différents.

Grâce à quoi, un même dispositif de moulage offre une polyvalence d'utilisation dans au moins deux dispositifs de moulage différents, formant l'un des postes d'une machine "rotative" pour la fabrication de récipients en matière thermoplastique à partir de préformes.

De préférence, l'organe d'actionnement 42 comporte un organe élastique 58 apte à rappeler automatiquement l'organe d'actionnement 42, auquel sont liés les premiers éléments 54 de fixation, vers la position de fixation dans laquelle chaque premier élément 54 coopère avec un deuxième élément 56 pour assurer la fixation de la coquille 20 au porte-coquille 22 (soit du moule au porte-moule lorsque le moule est monobloc).

La fonction de verrouillage en position de l'organe d'actionnement 42 est susceptible d'être assurée par l'actionneur 48.

Avantageusement, un actionneur 48 de type vérin pneumatique simple effet est apte à assurer le verrouillage de l'organe d'actionnement 42 en position de libération, l'actionneur 48 exerçant en permanence sur la partie de commande 46 de l'organe d'actionnement 42 un effort supérieur à l'effort du ressort formant l'organe de rappel élastique 58.

Avantageusement, un actionneur 48 de type vérin pneumatique dit à double effet est susceptible d'être utilisé pour assurer un double verrouillage de l'organe d'actionnement 42, tant en position de libération qu'en position de fixation.

De préférence, chaque organe d'actionnement 42 comporte au moins deux premiers éléments 54 de fixation de type mâle et des moyens de rattrapage de jeu, tel qu'un ressort 58, sont prévus entre l'un des éléments 54 et l'organe d'actionnement 42.

La figure 22 représente une vue de détail des moyens de fixation 40 précédemment illustrés en éclaté à la figure 21pour l'un des bords seulement, les moyens de fixation 40 étant représentés en position de fixation et alors que le dispositif de moulage 10 est en position fermée.

Le premier élément 54 de fixation, ici supérieur, porté par l'organe d'actionnement 42 présente globalement une forme parallélépipédique.

De préférence, le premier élément 54 comporte principalement un ergot 304 de verrouillage et deux faces latérales 306 de blocage.

L'ergot 304 de verrouillage présente un profil curviligne, globalement en "V" qui est reçu dans un logement 308 complémentaire du cran formant le second élément 56 de fixation réalisé dans la coquille 20.

Le cran 56 comporte encore une face horizontale 310 globalement plane que parcourt l'ergot 304 de verrouillage lorsque le premier élément 54 de fixation est déplacé avec l'organe d'actionnement 42 mû par l'actionneur 48 entre les positions de fixation et de libération, correspondant à l'introduction de l'ergot 54 dans ou hors du cran 56.

Lorsque le premier élément 54 coopère avec le second élément des moyens de fixation 40 pour maintenir en position la coquille 20 dans le porte-coquille 22, la coquille 20 qui s'oppose aux efforts appliqués par les moyens de fixation 40 exerce sur ces derniers, et tout particulièrement sur l'organe d'actionnement 42 par l'intermédiaire des premiers éléments 54 qui lui sont liés, des efforts qui tendent à provoquer un mouvement de rotation et par conséquent des contraintes en torsion.

Avantageusement, le dispositif de fixation du dispositif de moulage 10 comporte donc des moyens de blocage en rotation aptes à bloquer en rotation l'organe d'actionnement 42 pour s'opposer auxdits efforts de torsion sollicitant l'organe d'actionnement 42.

De préférence, les moyens de fixation 40 comportent des moyens de blocage en rotation aptes ici à bloquer les premiers éléments 54 de fixation portés par l'organe d'actionnement 42 et solidaires en rotation de celui-ci pour neutraliser lesdits efforts de torsion qui, à défaut, s'appliqueraient sur l'organe d'actionnement 42.

De préférence, les moyens de blocage en rotation de l'organe d'actionnement 42 sont constitués par les faces verticales 306 opposées de chaque premier élément 54 qui, en position de fixation, coopèrent respectivement avec une face d'appui 312 du bord 300 adjacent au logement 44 et avec une portion d'une face 314 de l'élément formé par la plaque 302 en forme de plaque ou barre.

Avantageusement, une partie 306 des moyens de blocage en rotation de l'organe d'actionnement 42 est liée en déplacement audit organe et est apte à coopérer avec une autre partie 312, 314 solidaire du porte-moule 14.

## Revendications

1. Dispositif de moulage (10) pour une machine de fabrication de récipients en matière thermoplastique par formage au moyen d'un fluide sous pression d'une préforme préalablement chauffée, le dispositif de moulage (10) comportant :
- deux porte-moules (14) montés mobiles l'un par rapport à l'autre autour d'un axe (O) de rotation entre une position ouverte et une position fermée,
- deux demi-moules (20, 220, 22, 222) qui, chacun pourvu d'une demi-empreinte (21) et porté par un porte-moule (14), sont respectivement montés dans le porte-moule (14) associé, et
- des moyens de fixation (40, 140, 240) aptes à fixer de manière démontable au porte-moule (14) chaque demi-moule (20, 220) occupant une position montée, où
les moyens de fixation (40, 240) de chaque demi-moule (20, 220) au porte-moule (14), montés mobiles entre au moins une position de fixation et une position de libération, sont aptes à être commandés en déplacement entre lesdites positions lorsque les porte-moules (14) sont en position fermée
**caractérisé en ce que** les moyens de fixation (40) sont au moins en partie intégrés à l'intérieur du dispositif de moulage (10) et sont agencés entre un bord (28) du demi-moule (20) et un bord du porte-moule (14) qui sont respectivement parallèles à l'axe (O) de rotation de manière à fixer le demi-moule (20) sur l'un et/ou l'autre de ses bords (28), et **en ce que** les moyens de fixation (40, 240) comportent au moins un organe d'actionnement (42, 242) des moyens de fixation (40, 240) qui est apte à être commandé sélectivement par un dispositif de commande (48, 248) pour le faire coulisser entre au moins lesdites positions de fixation et de libération de chaque demi-moule (20, 220).

2. Dispositif selon la revendication 1, **caractérisé en ce que** ledit au moins un organe d'actionnement (42, 242) des moyens de fixation est apte à être commandé en déplacement depuis l'extérieur du dispositif de moulage (10) pour provoquer la libération ou la fixation de chaque demi-moule (20) au porte-moule (14) par les moyens de fixation (40, 240) et cela quelle que soit la position ouverte ou fermée des porte-moules (14) du dispositif de moulage (10).

3. Dispositif selon la revendication 1, **caractérisé en ce que** les moyens de fixation (40, 240) comportent respectivement au moins un élément de fixation qui est solidaire de chaque demi-moule (20, 220) et au moins un autre élément de fixation qui, complémentaire dudit élément, est apte à être déplacé par l'organe d'actionnement (42, 242).

4. Dispositif selon la revendication 3, **caractérisé en ce que** ledit au moins un élément de fixation solidaire de chaque demi-moule (20, 220) est un premier élément de fixation (54, 254) de type mâle et ledit au moins un autre élément de fixation lié à l'organe d'actionnement (42, 242) est un second élément de fixation de type femelle (56, 256).

5. Dispositif selon la revendication 4, **caractérisé en ce que** ledit au moins un élément de fixation solidaire de chaque demi-moule (20, 220) est un second élément de fixation de type femelle (56, 256) et **en ce que** ledit au moins un autre élément de fixation lié à l'organe d'actionnement (42, 242) est un premier élément de fixation (54, 254) de type mâle.

6. Dispositif selon l'une quelconque des revendications 3 à 5, **caractérisé en ce que** l'organe d'actionnement (42, 242) comporte au moins deux éléments de fixation (54, 56) dont l'un est relié audit organe (42, 242) avec interposition d'un organe élastique (58) pour former une liaison à jeu apte à garantir le bon positionnement de chaque élément avec l'autre élément complémentaire associé.

7. Dispositif selon l'une quelconque des revendications 3 à 6, **caractérisé en ce que** le dispositif de commande (48, 248) est apte à solliciter l'organe d'actionnement (42, 242) pour provoquer sélectivement le déplacement dudit organe d'actionnement (42, 242) entre au moins :
- la position de fixation dans laquelle le second élément (56, 256) coopère avec le premier élément (54, 254) du demi-moule (20, 220) afin de fixer le demi-moule (20, 220) et le porte-moule (14) en plaquant le demi-moule (20, 220) contre le porte-moule (14), et
- la position de libération dans laquelle le second élément (56, 256) est escamoté afin de ne pas interférer avec le premier élément (54, 254) du demi-moule (20, 220), en particulier lorsque le demi-moule (20, 220) occupe ladite position montée.

8. Dispositif selon la revendication 7, **caractérisé en ce que** les moyens de fixation (40) comportent des moyens (52) de rappel élastique qui sollicitent l'organe d'actionnement (42) vers la position de fixation de sorte que ledit organe (42) est rappelé automatiquement vers ladite position de fixation.

9. Dispositif selon la revendication 8, **caractérisé en ce que** le dispositif de moulage (10) comporte un système de verrouillage (62) qui, associé aux moyens de fixation (40), est commandé sélectivement pour verrouiller en position de fixation ou en position de libération l'organe d'actionnement (42) comportant le second élément (56) des moyens de fixation (40).

10. Dispositif selon la revendication 9, **caractérisé en ce que** le système de verrouillage (62) comporte des moyens de commande (82) aptes à provoquer le déplacement d'au moins un loquet de verrouillage (72) qui est monté mobile entre :
- une position déverrouillée dans laquelle le loquet de verrouillage (72) est escamoté pour laisser l'organe d'actionnement (42) libre de coulisser, notamment entre les positions de fixation et de libération, et
- une position verrouillée dans laquelle le loquet de verrouillage (72) coopère sélectivement avec un premier cran (64) ou avec un deuxième cran (66) de l'organe d'actionnement (42), lesdits premier et deuxième crans (64, 66) correspondant respectivement à la position de fixation et à la position de libération de l'organe d'actionnement (42).

11. Dispositif selon la revendication 10, **caractérisé en ce que** le deuxième cran (66) de l'organe d'actionnement (42) et le loquet de verrouillage (72) sont conformés pour présenter, selon la direction de coulissement, un jeu propre à autoriser un déplacement de l'organe (42) au-delà de la position de libération afin de commander sélectivement par l'intermédiaire du dispositif de commande (48), des moyens de décollement (88) du demi-moule (20) par rapport au porte-moule (14).

12. Dispositif selon la revendication 11, **caractérisé en ce que** les moyens de décollement, (88) sont constitués par une partie du second élément (56) formant rampe qui est apte à exercer sur le premier élément (54) un effort de décollement lorsque le dispositif de commande (48) sollicite l'organe d'actionnement (42) pour le faire coulisser au-delà de la position de libération suivant une surcourse déterminée par ledit jeu du loquet de verrouillage (72) dans le deuxième cran (66).

13. Dispositif selon la revendication 10, **caractérisé en ce que** le dispositif de moulage (10) comporte des moyens de blocage en rotation aptes à bloquer en rotation l'organe d'actionnement (42, 242).

## Patentansprüche

1. Formvorrichtung (10) für eine Maschine zur Herstellung von Behältern aus thermoplastischem Material durch Formen einer vorab erwärmten Vorform mittels eines unter Druck stehenden Fluids, wobei die Formvorrichtung (10) aufweist:
- zwei Formträger (14), die um eine Drehachse (0) zwischen einer offenen Stellung und einer geschlossenen Stellung zueinander beweglich montiert sind,
- zwei Halbformen (20, 220, 22, 222), die, je mit einer Formhohlraumhälfte (21) versehen und von einem Formträger (14) getragen, in den zugeordneten Formträger (14) montiert sind, und
- Befestigungseinrichtungen (40, 140, 240), die jede eine eingebaute Stellung einnehmende Halbform (20, 220) ausbaubar am Formträger (14) befestigen können, wobei
die Verschiebung der zwischen einer Befestigungsstellung und einer Freigabestellung beweglich montierten Einrichtungen (40, 240) zur Befestigung jeder Halbform (20, 220) am Formträger (14) zwischen den Stellungen gesteuert werden kann, wenn die Formträger (14) in der geschlossenen Stellung sind,
**dadurch gekennzeichnet, dass** die Befestigungseinrichtungen (40) zumindest zum Teil ins Innere der Formvorrichtung (10) integriert und zwischen einem Rand (28) der Halbform (20) und einem Rand des Formträgers (14) angeordnet sind, die jeweils parallel zur Drehachse (0) sind, um die Halbform (20) an dem einen und/oder dem anderen ihrer Ränder (28) zu befestigen, und dass die Befestigungseinrichtungen (40, 240) mindestens ein Betätigungsorgan (42, 242) der Befestigungseinrichtungen (40, 240) aufweisen, das selektiv von einer Steuervorrichtung (48, 248) gesteuert werden kann, um es zwischen mindestens den Befestigungs- und Freigabestellungen jeder Halbform (20, 220) gleiten zu lassen.

2. Vorrichtung nach Anspruch 1, **dadurch gekennzeichnet, dass** die Verschiebung des mindestens einen Betätigungsorgans (42, 242) der Befestigungseinrichtungen von außerhalb der Formvorrichtung (10) gesteuert werden kann, um die Freigabe oder die Befestigung jeder Halbform (20) am Formträger (14) durch die Befestigungseinrichtungen (40, 240) zu bewirken, und dies unabhängig von der offenen oder geschlossenen Stellung der Formträger (14) der Formvorrichtung (10).

3. Vorrichtung nach Anspruch 1, **dadurch gekennzeichnet, dass** die Befestigungseinrichtungen (40, 240) je mindestens ein Befestigungselement, das fest mit jeder Halbform (20, 220) verbunden ist, und mindestens ein weiteres Befestigungselement aufweisen, das, komplementär zu dem Element, vom Betätigungsorgan (42, 242) verschoben werden kann.

4. Vorrichtung nach Anspruch 3, **dadurch gekennzeichnet, dass** das mindestens eine fest mit jeder Halbform (20, 220) verbundene Befestigungselement ein erstes Befestigungselement (54, 254) vom Einstecktyp und das mindestens eine weitere mit dem Betätigungsorgan (42, 242) verbundene Befestigungselement ein zweites Befestigungselement vom Aufnahmetyp (56, 256) ist.

5. Vorrichtung nach Anspruch 4, **dadurch gekennzeichnet, dass** das mindestens eine fest mit jeder Halbform (20, 220) verbundene Befestigungselement ein zweites Befestigungselement vom Aufnahmetyp (56, 256) ist, und dass das mindestens eine weitere mit dem Betätigungsorgan (42, 242) verbundene Befestigungselement ein erstes Befestigungselement (54, 254) vom Einstecktyp ist.

6. Vorrichtung nach einem der Ansprüche 3 bis 5, **dadurch gekennzeichnet, dass** das Betätigungsorgan (42, 242) mindestens zwei Befestigungselemente (54, 56) aufweist, von denen eines mit dem Organ (42, 242) mit Zwischenfügung eines elastischen Organs (58) verbunden ist, um eine Verbindung mit Spiel zu formen, das die richtige Positionierung jedes Elements mit dem anderen zugeordneten komplementären Element garantieren kann.

7. Vorrichtung nach einem der Ansprüche 3 bis 6, **dadurch gekennzeichnet, dass** die Steuervorrichtung (48, 248) das Betätigungsorgan (42, 242) beaufschlagen kann, um die Verschiebung des Betätigungsorgans (42, 242) selektiv zu bewirken zwischen mindestens:
- der Befestigungsstellung, in der das zweite Element (56, 256) mit dem ersten Element (54, 254) der Halbform (20, 220) zusammenwirkt, um die Halbform (20, 220) und den Formträger (14) zu befestigen, indem die Halbform (20, 220) gegen den Formträger (14) gedrückt wird, und
- der Freigabestellung, in der das zweite Element (56, 256) zurückgezogen wird, um nicht mit dem ersten Element (54, 254) der Halbform (20, 220) zu interferieren, insbesondere, wenn die Halbform (20, 220) die montierte Stellung einnimmt.

8. Vorrichtung nach Anspruch 7, **dadurch gekennzeichnet, dass** die Befestigungseinrichtungen (40) elastische Rückstelleinrichtungen (52) aufweisen, die das Betätigungsorgan (42) in die Befestigungsstellung beaufschlagen, so dass das Organ (42) automatisch in die Befestigungsstellung zurückgestellt wird.

9. Vorrichtung nach Anspruch 8, **dadurch gekennzeichnet, dass** die Formvorrichtung (10) ein Verriegelungssystem (62) aufweist, das, den Befestigungseinrichtungen (40) zugeordnet, selektiv gesteuert wird, um das das zweite Element (56) der Befestigungseinrichtungen (40) aufweisende Betätigungsorgan (42) in der Befestigungsstellung oder der Freigabestellung zu verriegeln.

10. Vorrichtung nach Anspruch 9, **dadurch gekennzeichnet, dass** das Verriegelungssystem (62) Steuereinrichtungen (82) aufweist, die die Verschiebung mindestens einer Verriegelungsklinke (72) bewirken können, die beweglich montiert ist zwischen:
- einer entriegelten Stellung, in der die Verriegelungsklinke (72) zurückgezogen ist, um das Betätigungsorgan (42) insbesondere zwischen den Befestigungs- und Freigabestellungen frei gleiten zu lassen, und
- einer verriegelten Stellung, in der die Verriegelungsklinke (72) selektiv mit einer ersten Raste (64) oder mit einer zweiten Raste (66) des Betätigungsorgans (42) zusammenwirkt, wobei die erste und die zweite Raste (64, 66) der Befestigungsstellung bzw. der Freigabestellung des Betätigungsorgans (42) entsprechen.

11. Vorrichtung nach Anspruch 10, **dadurch gekennzeichnet, dass** die zweite Raste (66) des Betätigungsorgans (42) und die Verriegelungsklinke (72) gestaltet sind, um in der Gleitrichtung ein Spiel aufzuweisen, das eine Verschiebung des Organs (42) über die Freigabestellung hinaus erlauben kann, um mittels der Steuervorrichtung (48) selektiv Ablöseeinrichtungen (88) der Halbform (20) bezüglich des Formträgers (14) zu steuern.

12. Vorrichtung nach Anspruch 11, **dadurch gekennzeichnet, dass** die Ablöseeinrichtungen (88) aus einem Teil des zweiten Elements (56) bestehen, der eine Rampe bildet, die auf das erste Element (54) eine Ablösekraft ausüben kann, wenn die Steuervorrichtung (48) das Betätigungsorgan (42) beaufschlagt, um es über die Freigabestellung hinaus gemäß einem Überhub gleiten zu lassen, der von dem Spiel der Verriegelungsklinke (72) in der zweiten Raste (66) bestimmt wird.

13. Vorrichtung nach Anspruch 10, **dadurch gekennzeichnet, dass** die Formvorrichtung (10) Drehsperreinrichtungen aufweist, die die Drehung des Betätigungsorgans (42, 242) blockieren können.

## Claims

1. Molding device (10) for a machine for manufacturing thermoplastic material containers by forming a pre-heated preform by means of a pressurized fluid, the molding device (10) including:
- two mold-carriers (14) mounted to be mobile relative to each other about a rotation axis (O) between an open position and a closed position,
- two half-molds (20, 220, 22, 222) which, each provided with a halfimprint (21) and carried by a mold-carrier (14), are mounted in the respective associated mold-carriers (14), and
- fixing means (40, 140, 240) adapted to fix each half-mold (20, 220) occupying a mounted position in a demountable manner to the mold-carrier (14), where
the means (40, 240) for fixing each half-mold (20, 220) to the mold-carrier (14), mounted to be mobile between at least a fixing position and a release position, is adapted to be driven in movement between sais positions when the mold-carriers (14) are in the closed position **characterized in that** the respective fixing means (40) are at least in part integrated into the interior of the molding device (10) and are disposed between an edge (28) of the half-mold (20) and an edge of the mold-carrier (14) that are parallel to the rotation axis (O) in such a manner as to fix the half-mold (20) to one and/or the other of its edges (28), and **in that** said fixing means (40, 240) comprise at least one member (42, 242) for actuating the fixing means (40, 240) which is adapted to be driven selectively by a drive system (48, 248) to cause it to slide between at least said fixing and release positions of each half-mold (20, 220).

2. Device according to claim 1, **characterized in that** said at least one member (42, 242) for actuating the fixing means is adapted to be driven in movement from outside the molding device (10) to cause the fixing means (40, 240) to release each half-mold (20) from the mold-carrier (14) or to fix it thereto regardless of the open or closed position of the mold-carriers (14) of the molding device (10).

3. Device according to claim 1, **characterized in that** the respective fixing means (40, 240) include at least one fixing element that is rigidly fastened to each half-mold (20, 220) and at least one other fixing element, complementary to said element, is adapted to be moved by the actuator member (42, 242).

4. Device according to claim 3, **characterized in that** said at least one fixing element rigidly fastened to each half-mold (20, 220) is a first fixing element (54, 254) of male type and said at least one other fixing element connected to the actuator member (42, 242) is a second fixing element (56, 256) of female type.

5. Device according to claim 4, **characterized in that** said at least one fixing element rigidly fastened to each half-mold (20, 220) is a second fixing element (56, 256) of female type and **in that** said at least one other fixing element connected to the actuator member (42, 242) is a first fixing element (54, 254) of male type.

6. Device according to any one of claims 3 to 5, **characterized in that** the actuator member (42, 242) includes at least two fixing elements (54, 56) one of which is connected to said member (42, 242) with a spring member (58) disposed between them to form a connection with play adapted to guarantee correct positioning of each element with the associated other complementary element.

7. Device according to any one of claims 3 to 6, **characterized in that** the drive system (48, 248) is adapted to load the actuator member (42, 242) to cause selective movement of said actuator member (42, 242) between at least:
- the fixing position in which the second element (56, 256) cooperates with the first element (54, 254) of the half-mold (20, 220) in order to fix the half-mold (20, 220) and the mold-carrier (14) by pressing the half-mold (20, 220) against the mold-carrier (14), and
- the release position in which the second element (56, 256) is retracted in order not to interfere with the first element (54, 254) of the half-mold (20, 220), in particular when the half-mold (20, 220) occupies said mounted position.

8. Device according to claim 7, **characterized in that** the fixing means (40) include elastic return means (52) that urge the actuator member (42) toward the fixing position so that said member (42) is returned automatically toward said fixing position.

9. Device according to claim 8, **characterized in that** the molding device (10) includes a locking system (62) associated with the fixing means (40) which is actuated selectively to lock the actuator member (42) including the second element (56) of the fixing means (40) in the fixing position or the release position.

10. Device according to claim 9, **characterized in that** the locking system (62) includes drive means (82) adapted to cause movement of at least one locking latch (72) that is mounted to be mobile between :
- an unlocked position in which the locking latch (72) is retracted to leave the actuator member (42) free to slide, notably between the fixing and release positions, and
- a locked position in which the locking latch (72) cooperates selectively with a first detent (64) or with a second detent (66) of the actuator member (42), said first and second detents (64, 66) respectively corresponding to the fixing position and the release position of the actuator member (42).

11. Device according to claim 10, **characterized in that** the second detent (66) of the actuator member (42) and the locking latch (72) are conformed to have, in the sliding direction, play adapted to allow movement of the member (42) beyond the release position in order selectively to drive via the drive system (48) means (88) for unsticking the half-mold (20) from the mold-carrier (14).

12. Device according to claim 11, **characterized in that** the unsticking means (88) are constituted by part of the second element (56) forming a ramp that is adapted to exert an unsticking force on the first element (54) when the drive system (48) loads the actuator member (42) to cause it to slide beyond the release position by an overtravel determined by said play of the locking latch (72) in the second detent (66).

13. Device according to claim 10, **characterized in that** the molding device (10) includes rotation locking means adapted to lock rotation of the actuator member (42, 242).
